# EUROPEAN PATENT SPECIFICATION

(11) **EP 0 425 991 B1**
(45) Date of publication and mention of the grant of the patent: **21.01.1998**
(21) Application number: 90120344.8
(22) Date of filing: 23.10.1990
(51) Int. Cl.: G02F 1/29, G02F 1/03, G02B 6/12, G02B 6/28, G02B 6/26

(54) **Waveguide-type optical switch**
Optischer Wellenleiterschalter
Commutateur à guide d'ondes optiques

(30) Priority: 26.10.1989 JP 279555/89; 14.09.1990 JP 244766/90
(43) Date of publication of application: 08.05.1991
(73) Proprietor: Oki Electric Industry Company, Limited, Tokyo 105 (JP)
(72) Inventor: Okayama, Hideaki, c/o Oki Electric Ind. Co., Ltd., Tokyo (JP); Asabayashi, Issei, c/o Oki Electric Ind. Co., Ltd., Tokyo (JP); Ishida, Toshimasa, c/o Oki Electric Ind. Co., Ltd., Tokyo (JP)
(74) Representative: Betten & Resch

(56) References cited:
- US-A- 4 116 530
- 15TH EUROPEAN CONFERENCE ON OPTICAL COMMUNICATION (ECOC) 10-14 September 1989, WeA13-4, pages 240-243, Gothenburg, SW; L. THYLEN et al.: "Theoretical and Experimental Investigation of 1x2 Digital Switches"
- TECHNICAL DIGEST SERIES vol. 4, 1989, pages 225-228; W.K. BURNS: "Voltage- Length Product for Modal Evolution Type Digital Switches"
- ELECTRONICS AND COMMUNICATIONS IN JAPAN vol. 72, no. 2, part 2, February 1989, pages 67-77,New-York,US; S. SAWA et al.: "Design Considerations for Mode-Conversion Type Optical Branching Waveguides"
- 5TH EUROPEAN CONFERENCE ON INTEGRATED OPTICS: (ECIO) vol. 1141, 26-28 April 1989, pages 244-247, Paris, FR; P. GRANESTRAND: " Polarization independent switches in Ti:LiNbO3, critical review of the solutions and their applications"
- APPLIED OPTICS vol. 21, no. 11, 1 June 1982, pages 1972-1979; R. Baets et al.: "Calculation of radiation loss in integrated-optic tapers and Y-junctions"
- ELECTRONICS LETTERS vol. 25, no. 17, 17 August 1989, pages 1180,1181, Stevenage, Herts, GB; M. SCHIENLE et al.: "GaInAsP/InP Zero-gap Directional Couplers as Compact Optical WDM Filters"
- ELECTRONICS LETTERS vol. 13, no. 23, November 1977, page 693; H. SASAKI: "Efficient Intensity Modulation in a Ti-diffused LiNbO3 Branched Optical Waveguide Device"
- ELECTRONIC DESIGN vol. 26, no. 1, January 1978, page 160; "Electro-optic modulators may be easier to make"

## Description

### Field of the Invention

This invention relates to a waveguide-type optical switch which can realize digital optical output control.

### Description of the conventional technique

In recent years, Y-branch type optical switches have been watched with keen interest due to their merit of easy use with digital ON/OFF operation under easy producing conditions. For instance, this type of optical switch is disclosed in Literature I: "Integrated and Guided-Wave Optics", OSA 1989 Technical Diges't Series, Vol. 4 pp.255 - 228, or Literature II: "IEEE Journal of Quantum Electronics, QE-16, 446 (1980). These optical switches are provided with the two waveguide routes forming the waveguide route system preserving the normal (or intrinsic) mode, and through control of propagation-constant difference or refractive index difference between waveguide routes by setting the drive voltage to more than its given constant level, it is possible to form the state that optical output is on one side and is not on the other side of two waveguide routes or the state that the optical output is on the other side and is not on the one side of two waveguide routes, thereby digital ON/OFF operation can be realized.

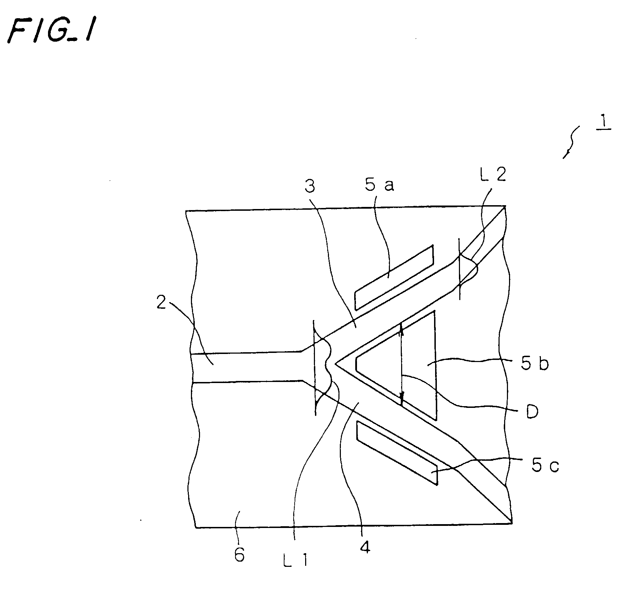

Fig. 1 shows a plan view of brief constitution of waveguide-type optic switch disclosed in Literature I.

Waveguide-type optical switch 1 in Literature I comprises waveguide-routes 2, 3 and 4 forming Y-branch and electrode members 5a, 5b and 5c for branched waveguide routes 3 and 4. The waveguide routes and the electrode members are provided on a substrate 6. Waveguide routes 3 and 4 have linear shape, and form the waveguide route system preserving normal mode, respectively. Control of the propagation-constant difference or refractive index difference between waveguide routes 3 and 4 is exerted through the electro-optical effect caused by exerting the electric field to these waveguide routes 3 and 4 by electrode members 5a, 5b and 5c. Operation is briefly explained with one example. Here, the normal mode light of the waveguide route system forming the waveguide routes 3 and 4 shall be regarded as even mode rays. In the example, even mode rays or light L1 is entering the waveguide route 2, and light L1 is input to the branch part of the waveguide routes 3 and 4. Then, propagation-constant difference between waveguide routes 3 and 4 is controlled to increase the refractive index of waveguide route 3 at one side more than that of waveguide route 4 at the other side by a certain amount, thereby, optical power of the light L1 is concentrated to the final end of the waveguide route 3, and from this final end portion, even mode light L2 is output.

The conventional waveguide-type optical switch has been designed to obtain the crosstalk characteristics suitable for practical uses by only the specific voltage for the two waveguide routes forming the waveguide-route system which preserve the normal mode, and its waveguide route shape is made into this specific form. For the experimental report on the optical switch in Literature II, refer to the Literature III: European Conference on Optical Communication '89, Lecture No. WeA13.

At the conventional optical switch in Literature I, the two waveguide routes forming the above-mentioned waveguide route system are linear waveguide routes. Then, for obtaining practically good crosstalk characteristics with low operating voltage, it is necessary to elongate the device length (electrode-length) by reducing the crossing angle. Alternatively, it is necessary to increase the operating voltage greatly for obtaining the practically good crosstalk characteristic at a short device length.

In conventional optical switch in Literature II, the drive voltage is reduced by designing the waveguide route so as to obtain crosstalk characteristic suitable for practical uses by only a specific drive voltage. However, the deviation of the drive voltage from its specific voltage results in obtaining a crosstalk characteristics not suitable for practical use, thus, there has been a problem of very narrow range of drive voltage providing the crosstalk characteristic suitable for practical use.

### Summary of the Invention

An object of the invention is to provide a waveguide-type optical switch which realizes the crosstalk characteristic suitable for practical use in a wider range of the drive voltage than that of conventional optical switch, and which realizes a crosstalk characteristic suitable for practical use with a lower drive voltage or by shorter device length than those of the conventional optical switch.

In order to attain the above object of the invention, there is provided a waveguide-type optical switch as disclosed in claim 1 or claim 2. Claims 3 to 24 disclose further embodiments of the invention.

The inventor, examined changes in the value of the mode conversion index γ for two waveguide routes being straight lined waveguide routes through numerical analysis. The analysis reveals that the value of index γ is distributed like a hill between the branching portion and end portion of the two waveguide routes. It is also found that with an increase of the drive voltage the position of the maximum value of index γ is shifted from the side of the end portion to the side of the branching portion of the two waveguide routes, while the maximum value of the index γ is reduced.

The index γ represents the mode conversion size. The mode conversion is increased in places where the value of the index γ is large, whereas it is reduced where the value of index γ is small. Thus, the increase of the maximum value of the index γ is thought to mean that the crosstalk characteristics are improved with increase of the drive voltage. The waveguide-type optical switch can be used practically as long as its crosstalk characteristic is reaching a standard value, for instance - 15 to - 20 dB. Therefore, the maximum value of the index γ shifted to the side of the branching portion can be increased without any practical problem up to that standard level.

According to the invention, each of the two waveguide routes is provided with a intermediate portion, said intermediate portion comprising a curved waveguide route portion, and the local branch angle between the two waveguide routes is larger on the side of the starting end of the curved portion while it is smaller on the side of the terminating end. When the local branch angle is larger, the maximum value of the index γ in the portion where the local branch angle is larger also is increased. However, as will be understood from the above it can be thought that practically suitable crosstalk characteristics are obtainable even by increasing the maximum value of index γ up to a certain value.

Besides, by the provision of the curved portions the following effects or advantages i) and ii) can be achieved simultaneously when compared to a conventional waveguide type optical switch:
i) Having the same drive voltage as a conventional one, crosstalk characteristics suitable for practical uses can be realized at shorter length of device, or, having the same device length as a conventional one, crosstalk characteristics suitable for practical uses can be realized at a lower drive voltage.
ii) Crosstalk characteristics suitable for practical uses can be realized in a wider range of drive voltage.

### Brief Description of the Drawings

The foregoing and other objects and advantages of the present invention will be seen be reference to the description, taken in connection with the accompanying drawings, in which:
Fig. 1 is a plan view schematically showing the construction of a conventional waveguide-type optical switch;
Fig. 2 is a fragmentary plan view schematically showing a first embodiment of the invention;
Fig. 3 is a view for explaining the waveguide route shape in the first embodiment;
Fig. 4 is a view showing the relation between parameters F and y;
Fig. 5 is a view showing the change of the index γ of mode conversion with respect to parameter n;
Figs. 6A and 6B are views showing crosstalk characteristics of a conventional element;
Figs. 7A and 7B are views showing crosstalk characteristics of the first embodiment;
Fig. 8 is a view showing an example of the result of an analysis for optimizing the min/max coupling coefficient ratio R;
Fig. 9 is a view showing an example of the result of an analysis for optimization of K₀L;
Fig. 10 is a view for explaining the m dependency of peak γₚ;
Fig. 11 is a view showing an example crosstalk characteristics in case where waveguide route portion from τ = 0 to τ = 1 is a straight lined waveguide path;
Fig. 12 is a fragmentary plan view schematically showing the construction of the second embodiment of the invention;
Fig. 13 is a fragmentary plan view schematically showing the construction of the third embodiment of the invention;
Fig. 14 is a fragmentary plan view schematically showing the construction of the fourth embodiment of the invention;
Fig. 15 is a view for explaining the manner of changes in the index γ of mode conversion;
Fig. 16 is a view showing the manner of changes in the peak γₚ with respect to Xₚ/Xₑ;
Figs. 17A to 17B and 18 are views showing crosstalk characteristics of the fourth embodiment;
Fig. 19 is a view showing an example of crosstalk characteristics when waveguide route portion from τ = 0 to τ = 1 is a straight waveguide route;
Fig. 20 is a fragmentary plan view schematically showing the construction of a modification of the fourth embodiment of the invention;
Fig. 21 is a fragmentary plan view schematically showing the construction of the fifth embodiment of the invention; and
Fig. 22 is a view showing an example of crosstalk characteristics in the fifth embodiment of the invention.

### Detailed Description of Preferred Embodiments

Now, preferred embodiments of the invention will be described with reference to the drawings. The drawings provide only schematic illustration such as to permit understanding of the invention, and therefore, the shapes, sizes and arrangement of individual components are by no means limitative.

### First Embodiment

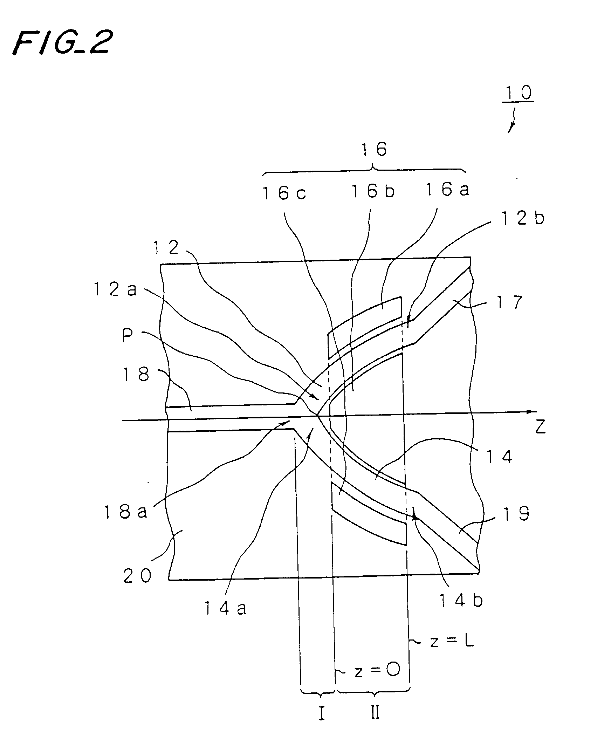

Fig. 2 shows the plan view of brief constitution of embodiment of this invention. This embodiment concerns an optical switch having a waveguide route of Y branch type.

As shown in this diagram, the waveguide-type optical switch 10 of the first embodiment is provided with substrate 20, branched two waveguide routes 12 and 14 provided thereon, electrode 16 also provided thereon and controlling the propagation-constant difference or refractive index difference between the two waveguide routes 12 and 14. The distance D between the two waveguide routes 12 and 14 expands from the branch portion I of waveguide routes 12 and 14 towards the final end portions 12b and 14b, as shown in Fig. 2. In the following description, axis Z is considered, with respect to which center lines of waveguide routes 12 and 14 (i.e., lines connecting center points of waveguide routes in the width direction thereof) are symmetric to each other, and a direction from the light incidence (input) side to the emission (output) side (i.e., from left to right in the Figure) is taken as plus direction of the Z axis.

A curved portion II is provided at each of the two waveguide routes 12 and 14, and the local branch angle (or opening angle) is enlarged for the waveguide routes 12 and 14 on the side of starting end (Z = 0) of the curved portion II, also, local branch angle is reduced for waveguide routes 12 and 14 on the side of finishing end (Z = L) at the curved portion II.

The local branch angle at the curved portion II of waveguide routes 12 and 14 is reduced gradually up to the finishing end (Z = L) from the starting end (Z = 0) at the curved portion II so that the waveguide route shape at the curved portion II has a smoothly curved form.

Waveguide route shape at the curved portion II, however, may also be made as multi-step-curved shape.

In a more detailed explanation, the waveguide-type optical switch 10 of this embodiment is provided with first and second waveguide routes 12 and 14, light incidence (input) side waveguide route 18 forming a Y-branch, and electrode 16 provided for branched first and second waveguide routes 12 and 14.

The Y-branch is formed by connecting the end part 18a of the light incidence side waveguide route 18 with end part 14a of the second waveguide route 14 and the end part 12a of the first waveguide route 12. These waveguide routes 18, 12 and 14 are provided on the substrate 20. Thereby, the end parts 12b and 14b of waveguide 12 and 14 become the other ends of waveguide routes 12 and 14. The end parts 12b and 14b usually have their ends connected to linear waveguide routes 17 and 19 and are used for connection of optical fibers or the like, but these parts are not shown.

The electrode 16 includes electrode members 16a, 16b and 16c. The electrode member 16a is located beside first waveguide route 12 on the side thereof remote from the second waveguide route 14. The electrode member 16b is located between first and second waveguide routes 12 and 14. Also, the electrode member 16c is located beside the second waveguide route 14 on the side thereof remote from the first waveguide route 12. Then, these electrode members 16a, 16b and 16c are provided on the substrate 20. Electrode-starting end position is set as Z = 0, and electrode-finishing end position is set as Z = L, then, each electrode member 16a, 16b and 16c is extending from Z = 0 to Z = L.

The two waveguide routes 12 and 14 form a waveguide route system to preserve or hold the normal mode (or intrinsic mode) between the finishing end (Z = 0) of the branch part I of these waveguide routes 12 and 14, and finishing end (Z = L) of the bending portion II thereof. Therefore, this waveguide-route system is provided with at least two waveguide routes 12 and 14 and its branched part I and a curved portion II.

The branched part I is a portion for equal division of optical power of normal mode in this waveguide route system into two waveguide route 12 and 14, and it has the linear symmetric shape to the Z-axis as mentioned later for equal division of the optical power.

The end part (part at Z = L and its nearby waveguide route part) of the curved portion of the two waveguide routes 12 and 14 is a portion for concentrating the optical power of normal mode in the waveguide route system into either one of two waveguide routes 12 and 14.

The end parts of the curved portion II of two waveguide routes 12 and 14 are separated from each other by such a distance that under applying a voltage to the electrode 16, a field distribution (or optical power strength distribution) of normal mode can exist at the finishing end of curved portion II of one of waveguide routes 12 and 14, whereas can not exist at the end part of curved portion II of the other waveguide route. At the same time, the distance between the waveguide routes in a region from the ends of the curved portions to the finishing end part 12b, 14b (waveguide route portion at Z > L) at waveguide routes 12 and 14 is wider than or equal to the distance between the waveguide routes at the ends of the curved portions II. Therefore, when optical power is concentrated to the one of electrode-finishing end parts by applying a voltage to the electrode 16, optical output can be given from one waveguide route with the equal optic power ratio to that at the electrode-terminal end of the waveguide routes 12 and 14. Thereby, the part of Z > L of waveguide routes 12 and 14 may be omitted.

For instance, by applying a voltage to the electrode 16, thereby setting the ratio of optical power at a portion of waveguide route 12 corresponding to finishing end (terminal end) of the electrode and that of waveguide route 14 as 1 : 0 or 0 : 1, it is possible to set the optical power ratio output at finishing ends 12b and 14b of waveguide routes 12 and 14 as 1 : 0 or 0 : 1, thus, ideal digital operation can be made.

Next, the shape of the curved portion obtained by numerical analysis is described.

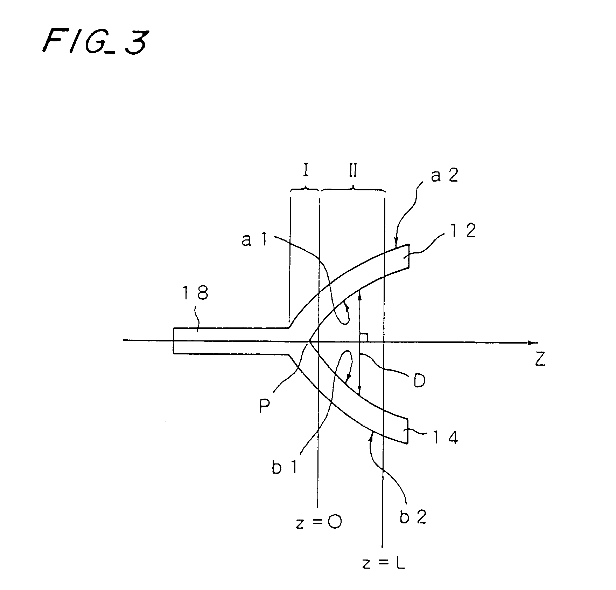

Fig. 3 shows a schematic plan view of the shape of the waveguide route of a waveguide type optical switch of the first embodiment.

In this diagram, the Z-axis is passing the branch point P of the waveguide routes 12 and 14 and optical propagating distance Z in Z-axial direction from the starting position (Z = 0) of the curved portion I is taken on Z-axis. D shows the distance between inside edge a1 of waveguide 12 and inside edge b1 in the plane of the surface of the substrate 20 while being perpendicular to the Z-axis. The distance D is a distance between waveguide routes. The inside edge a1 is the edge of waveguide route 12 being close to the waveguide route 14, and the inside edge b1 is the edge of waveguide route 14 being close to waveguide route 12.

Optical ratio f of the first and second waveguide routes 12 and 14 can be expressed quantitatively by the following formula (1). (See Literature II.)${\text{f = - X + (X}}^{\text{2}} {\text{+ 1)}}^{\text{1/2}}$ where, X =Δβ/(2·K), and K is coupling coefficient between waveguide route, and Δβ is propagation constant difference between the waveguide routes.

At Z = 0 of waveguide route 12 and 14, if f --> 1, optical power is equally divided, then, X --> 0 according to formula (1). When f --> 0 at Z = L of waveguide routes 12 and 14, optical power is concentrated to one of waveguide routes, and a field distribution of normal mode exsists at one waveguide route alone, then, X --> ∞ according to formula (1).

By changing any of the connecting coupling coefficient K and propagation-constant difference Δβ, X --> ∞ or X --> 0 can be obtained, whereas, the propagation-constant difference Δβ is changed in conformity with the voltage input to the electrode 16 and the coupling coefficient K is changed with the distance D between the first and second waveguide routes. Thus, for reducing the drive voltage, it is better to make X --> ∞ by reducing the coupling coefficient K rather than to make X --> ∞ by enlarging the propagation-constant difference Δβ.

Accordingly, when considering the concentration or equal division of optical power by changing the coupling coefficient K, X --> 0 and f --> 1 can be obtained by K --> ∞ at Z = 0 of waveguide routes 12 and 14, and K --> 0 at Z = L of waveguide routes 12 and 14 results in X --> ∞ in case of Δβ > 0, then, f --> 1/(2X) --> 0 can be obtained (while Δβ < 0 will result in f --> ∞).

As in the above, waveguide routes 12 and 14 should be formed in such a manner that x can change in a range from X = 0 to X = ∞ at the zone from Z = 0 to Z = L of waveguide routes 12 and 14. Moreover, for selecting optical output to either one of waveguide routes 12 and 14, it is necessary to widen the distance D between the waveguide routes on the side of Z = L of the waveguide routes 12 and 14 and to narrow the distance D on the side of Z = 0 of waveguide routes 12 and 14. D is a distance between opposing inside edges of waveguides measured in a direction perpendicular to the Z axis.

Therefore, the distance D between the waveguide routes should be widened while changing from X = 0 to X = ∞ at the zone from Z = 0 to Z = L, but in this case, for obtaining crosstalk characteristic suitable for practical use, normal mode conversion should be suppressed as low as possible. Thus, it is necessary to preserve the normal mode in the waveguide route system of waveguide routes 12 and 14. Here, index "γ" shows the mode-conversion rate of normal mode or intrinsic mode. It is estimated that a larger index "γ" induces the mode-conversion of normal mode, and the smaller index "γ" may reduce the mode-conversion of normal mode.

Then, when considering the index "γ" of conversion rate of normal mode, index "γ" can be expressed by the following formula (2):$\text{γ =} \frac{\text{1}}{{\text{2 · Δβ · (X}}^{\text{2}} {\text{+ 1)}}^{\text{3/2}}} \text{·} \frac{\text{dX}}{\text{dZ}}$ (See Literature II)

On the other hand, X = Δβ /(2·K) as defined in formula (1), also, the coupling coefficient K can be expressed by the following formula (3), thus, the formula (4) can be obtained by setting normalized waveguide interval ω = S·(D - D₀).${\text{K = K}}_{\text{0}} {\text{·exp{-S·(D - D}}_{\text{0}} \text{)}}$ Whereas, K₀ is a coupling coefficient between waveguide routes at Z = 0, and S is a constant (parameter showing the light or ray-exuding amount from the waveguide route and determined depending on the shape of the waveguide) for stipulating the reducing rate of the coupling coefficient. These K₀ and and S can be set optically through designs. D₀ is the distance of the waveguides at Z = 0.${\text{X = {Δβ/(2·K}}_{\text{0}} \text{)} · e×ρω} {\text{= X}}_{\text{0}} \text{· e × ρ ω}$ Whereas, X₀ shows X at Z = 0.

Accordingly, the formula (2) can be changed to show the following formula (5) by using the formula (4)$\text{γ =} \frac{\text{1}}{\text{2 · Δβ}} \text{·} \frac{{\text{X}}^{\text{2}}}{{\text{(X}}^{\text{2}} {\text{+ 1)}}^{\text{3/2}}} \text{·} \frac{\text{dω}}{\text{dZ}} \text{=} \frac{\text{1}}{\text{2 · Δβ}} \text{· F ·} \frac{\text{dω}}{\text{dz}}$ Where,$\text{F =} \frac{{\text{X}}^{\text{2}}}{{\text{(X}}^{\text{2}} {\text{+ 1)}}^{\text{3/2}}}$

Thereby, dω/dZ shows the opening angle in radians specified by the reducing rate S for the open angle dD/dZ of the waveguide routes 12 and 14. dω/dZ is called, here, as a normalized local branch angle (or normalized opening angle).

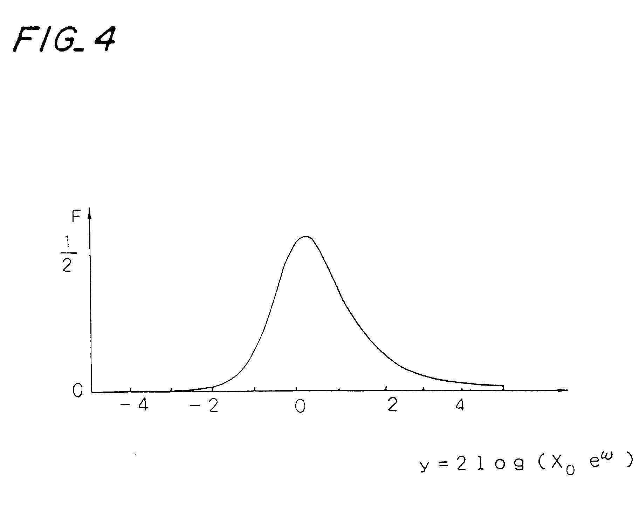

Here, with X² = 10^{y}, F is expressed by the function of y, then, relations as shown in Fig. 4 can be obtained on F and y.

In Fig. 4, the abscissa is shown by y = 2log(X₀·ε^{ω}), and F is taken to show the ordinate.

As shown in Fig. 4, F becomes maximum in case of nearly y = 0.14. When F is maximum, X ≃ 1.2 and ω=ln(1.2/X₀), and the index "γ" becomes maximum. ln is a natural logarithm. At the zones from Z = 0 to Z = L of waveguide routes 12 and 14, for obtaining the crosstalk characteristics suitable for practical use by reducing the mode-conversion, the index "γ" shall be reduced at this "ω" approximately.

Here, if *ω* is given in the expression ω = α·(Z + Z₀)ⁿ, the following formula (7) can be obtained with X = 1.2. Where, α and n are parameters indicating the shape (or curve) of waveguide route and have positive values.${\text{γ}}_{\text{max}} \text{≃} \frac{\text{1}}{\text{4 · Δβ}} {\text{· n · ω}}_{\text{m}} \text{· n} \sqrt{\frac{\text{α}}{{\text{ω}}_{\text{m}}}}$ Whereas, γₘₐₓ and ωₘ show values of γ and ω when the index "γ" becomes maximum, respectively.

By the way, when the element length (electrode length) measured in Z direction is L, ω = α·Lⁿ at an element terminal (Z = L), and the following formula (8) can be obtained.${\text{X = X}}_{\text{0}} {\text{· exp(α·L}}^{\text{n}} {\text{) ≡ X}}_{\text{e}}$ Accordingly, α can be expressed in the next formula (9).$\text{α =} \frac{\text{1}}{{\text{L}}^{\text{n}}} \text{· ln} \frac{{\text{X}}_{\text{e}}}{{\text{X}}_{\text{0}}} \text{=} \frac{\text{1}}{{\text{L}}^{\text{n}}} \text{· ln} \frac{{\text{K}}_{\text{0}}}{{\text{K}}_{\text{e}}} \text{=} \frac{\text{1}}{{\text{L}}^{\text{n}}} {\text{· {ln (X}}_{\text{e}} {\text{/ 1.2) + ω}}_{\text{m}} \text{}}$

Then, by the formulae (7) and (9), the following formula can be obtained.${\text{γ}}_{\text{max}} \text{≃} \frac{\text{1}}{\text{4 · Δβ · L}} {\text{· n · ω}}_{\text{m}} \text{· n} \sqrt{\frac{{\text{ln (X}}_{\text{e}} {\text{/X}}_{\text{0}} \text{)}}{{\text{ω}}_{\text{m}}}}$ Now, ωₘ can be expressed as in the following formula (11).${\text{ω}}_{\text{m}} \text{= ln} \frac{{\text{X}}_{\text{e}}}{{\text{X}}_{\text{0}}} \text{- ln} \frac{{\text{X}}_{\text{e}}}{\text{1.2}}$ When X = X₀ --> 0 at Z= 0, and X = Xₑ --> ∞ is at Z = L,$\text{ln} \frac{{\text{X}}_{\text{e}}}{{\text{X}}_{\text{0}}} \text{» ln} \frac{{\text{X}}_{\text{e}}}{\text{1.2}}$ can be obtained.
Accordingly, with formulae (10) and (11), the following formula (12) can be obtained.${\text{γ}}_{\text{max}} \text{→} \frac{\text{1}}{\text{4 · Δβ · L}} \text{· n · ln} \frac{{\text{X}}_{\text{e}}}{{\text{X}}_{\text{0}}}$ Accordingly, it is understood that n shall be smaller for making γₘₐₓ smaller. In order to hold the normal mode and reduce crosstalk, it is better to make n a value in a range of 0 < n < 1.

Then, in this embodiment, inside edges (al and bl) of waveguide routes 12 and 14 are formed in such a way that the specified or normalized local branch angle dω/dZ shall be dω/dZ = n·α·(Z + Z₀)^{n - 1}, 0 < n < 1 (where, α and Z₀ be constants set suitably for design), and outerside edge a2 of waveguide route 12 shall be set in parallel with the inside edge 1, also, outside edge b2 of the waveguide route 14 shall be set in parallel with the inside edge b1. Whereas 0 < dω/dZ < π/90 shall be preferable at Z = 0.

Z₀ is a parameter for designating the maximum local branch angle (dω/dZ at Z = 0). It is Z₀ ≃ 0 and thought to have no influence on the above analysis.

In order for the waveguide routes 12 and 14 to form a waveguide system having an normal mode (or intrinsic mode), it is desired to satisfy the following equation between Z = 0 and Z = L.$\frac{\text{2·K(Z)}}{\text{dω/dZ}} \text{> 0.43}$ Where, K(z) shows the coupling coefficient at the position of distance (z).

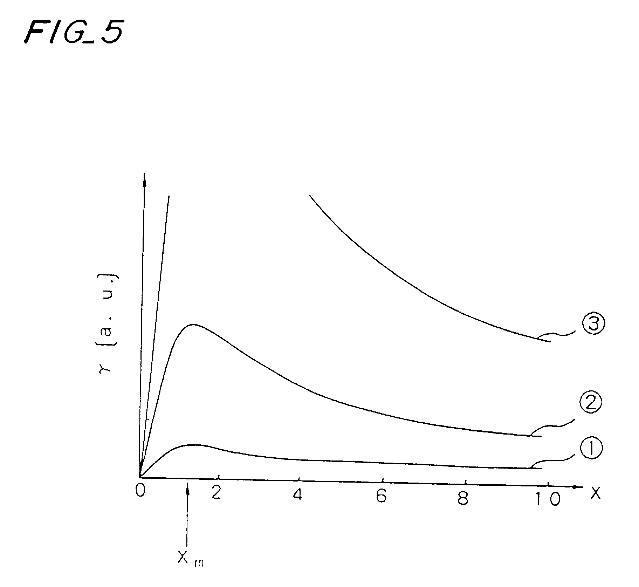

Fig. 5 shows the manner of change of index "γ" against n in case of X = 10⁻⁴ as X =Δβ/(2·K) noted above. In Fig. 5, index "γ" was taken for the ordinate, and X was taken for abscissa. Relations between "γ " and X shall be expressed by curves ①, ② and ③ in cases of n = 0.5, 1 and 2, respectively.

As understood from these curves ① - ③, smaller n-value will induce a smaller index "γ", and the position of X (showing by Xₘ in the diagram) to make "γ" maximum becomes nearly 1.2, thus, there is no big change against the change of the value of n, thereby, it is understood that the above approximate analysis is permitted.

In the conventional element in Literature II, the conversion of normal mode of γ = 1/(2· Δβ ·L) was extended over whole element. While in this embodiment, γₘₐₓ is obtained at the part of element when the index "γ" shows ωₘ = ln(1.2/X₀), and at other elements parts, it is less than γₘₐₓ, also, γₘₐₓ can be expressed by the formula (12), thus, with 0 < n < 1, mode conversion is less than the conventional element in literature II, therefore crosstalk characteristic can be improved.

Next, by solving the coupling formula, a simulation can be made for the crosstalk characteristic in a conventional example of Literature I and in this embodiment. Crosstalk characteristic of this embodiment can be expressed by using the min/max coupling coefficient ratio R = X₀/Xₑ, Δβ·L and element length coupling length ratio R = "element ratio"/"coupling length".

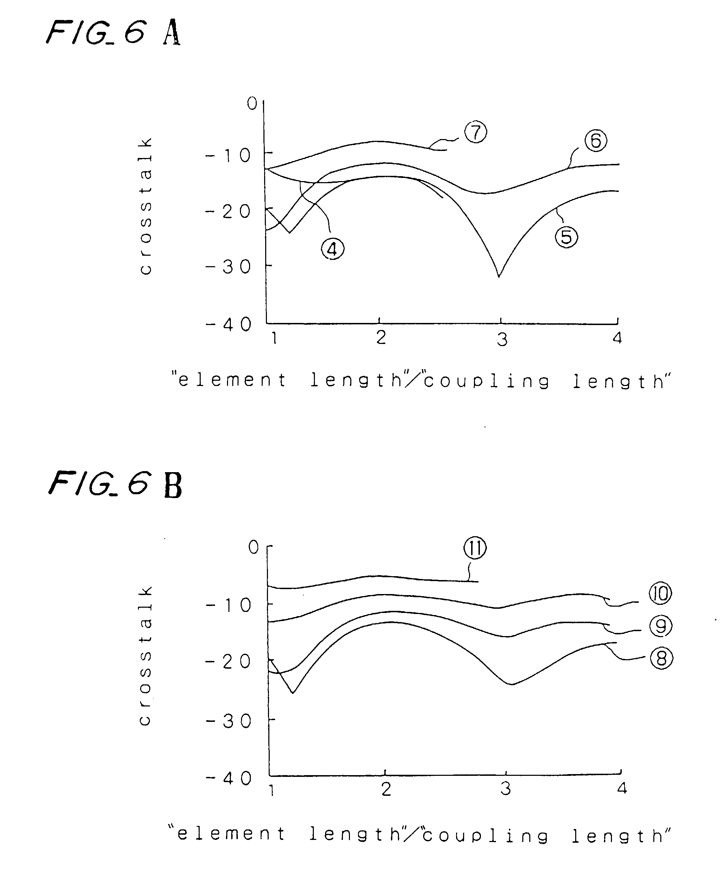

Figs. 6A and 6B show the diagrams expressing the crosstalk characteristic of the conventional example in Literature I at R = 0.01 and 10⁻⁴. In these diagrams, the vertical axis shows the crosstalk, and the horizontal axis shows "element length"/"coupling length".

Curves ④, ⑤, ⑥ and ⑦ in Fig. 6A show the crosstalk characteristics in setting Δβ·L/π = 3, 2, 1.5 and 1. Curves ⑧ ⑨ 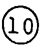 and 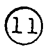 in Fig. 6B show crosstalk characteristics in setting Δβ·L/π = 4, 3, 2, and 1.

In the conventional cases, these are not shown in diagrams, whereas, crosstalk changes greatly by "element length"/"coupling length" at R = 0.1, thus, practically good enough crosstalk characteristics cannot be obtained.

As shown in Fig.6, with min./max. coupling coefficient ratio R = 0.01, a crosstalk of average about -15dB can be obtained bearly with Δβ·L = 1.5. At R = 10⁻⁴, for obtained crosstalk of average about -15dB, it is necessary to increase Δβ·L/π over 3.

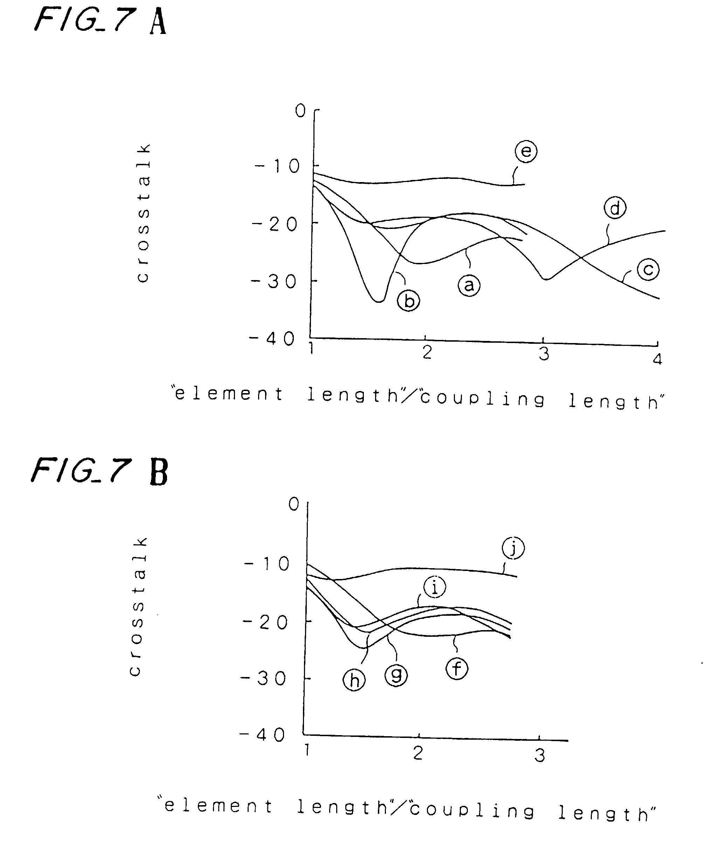

Figs. 7A and 7B show the diagrams of crosstalk characteristics in setting n = 1/3 and 1/2 at the first embodiment with R = 0.01. In the Figs. 7A and 7B, the vertical axis in the diagram shows crosstalk, and horizontal axis shows the "element length"/"coupling length". Whereas, in either case of Figs. 7A and 7B, the specified local branch angle dω/dZ in its maximum angle (dω/dZ at Z = 0) was set π/360 with Z₀ = 0.01 x L.

Curves ⓐ, ⓑ, ⓒ, ⓓ and ⓔ in Fig. 7A show crosstalk characteristics in case of Δβ·L/π = 4, 3, 2, 1.5 and 1. Similarly, curves ⓕ, ⓖ, ⓗ, ⓘ and ⓙ in Fig. 7B show crosstalk characteristics in case of Δβ·L/π = 4, 3, 2, 1.5 and 1. Although no diagram is shown, in the conventional examples and in this embodiment, with R = 0.1, crosstalk changes greatly by "element length"/"coupling length", thus, practically good enough crosstalk characteristics cannot be obtained. Preferably, it is recommended to set min/max coupling coefficient ratio R to 0.003 < R < 0.03, especially, R≃ 0.01 is preferable.

In comparison of the optical switch of this embodiment with the conventional optical switch in Literature I, as shown in Fig. 6, the conventional case, barely an average of about -15dB crosstalk can be obtained with R = 0.01 and Δβ · L = 1.5. For obtaining crosstalk average about -15dB with R = 10⁻⁴, it is necessary to increase Δβ·L/π over 3.

On the other hand, in this embodiment, as understood from Figs. 7A and 7B, in all cases of n = 1/3 $\text{(ω = α} \sqrt[\text{3}]{{\text{Z+Z}}_{\text{0}}} \text{)}$ and n = 1/2 $\text{(ω =} \sqrt[\text{α}]{{\text{Z+Z}}_{\text{0}}}$, average crosstalk of -20dB can be obtained at nearly Δβ·L/π = 1.5.

Accordingly, in this embodiment, crosstalk of -20dB can be obtained regardless of "element length"/ "coupling length" with nearly Δβ·L = 1.5. Therefore, crosstalk can be improved for over 5dB as compared with conventional examples in Literature I.

Next, an analysis is made separately from the above mentioned analysis on this first embodiment. The definition of each parameter is the same as that of the above mentioned analysis unless otherwise specified.

Next, the specified waveguide route distance "ω" is given as shown in the following formula (13):${\text{ω = s · (D - D}}_{\text{0}} \text{)} \text{= α ·} \sqrt[\text{m}]{\text{L}} \text{·} \sqrt[\text{m}]{\text{τ}}$ Where, m is a real number larger than 1, and is related with n mentioned above as in n = 1/m. Also, "τ" is a specified or normalized distance Z specified with element length (electrode length) L. "τ" = 0 shows the starting end position of curved portion II (position corresponding to Z = 0), and τ = 1 shows the ending position (position corresponding to Z = L) of curved portion II.

In case shown in formula (13), the index γ is expressed as shown in the following formula (14).$\text{γ =} \frac{\text{1}}{\text{2 · Δβ}} \text{·} \frac{{\text{X}}^{\text{2}}}{{\text{(X}}^{\text{2}} {\text{+ 1)}}^{\text{3/2}}} \text{·} \frac{\text{dω}}{\text{Ldτ}}$ When the value of index γ becomes peak at $\text{X =} \sqrt{\text{2}} {\text{(=X}}_{\text{p}} \text{).}$

Xₚ is expressed as in the following formula (15).${\text{X}}_{\text{p}} \text{=} \frac{\text{Δβ}}{{\text{2 · K}}_{\text{0}} {\text{· e × ρ {-s · (D - D}}_{\text{0}} \text{)}}}$

By formula (14) and (15), index γ (γₚ) peak can be expressed by the following formula (16).

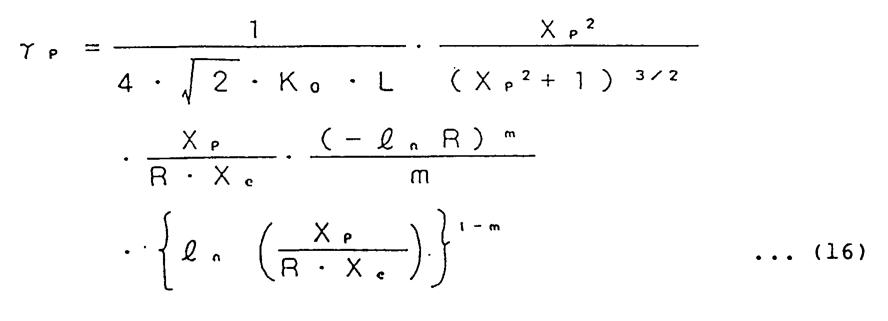

Where, K₀ is coupling coefficient (minimum coupling coefficient) with τ = 0, and Kₑ is coupling coefficient (maximum coupling coefficient) with τ = 1. R shows the ratio of min/max coupling coefficient, R=X₀/Xₑ = Kₑ/K₀, X₀ = Δβ/(2·K₀), and Xₑ=Δβ/(2·Kₑ).

Where, minimizing measure of K₀·L and R will be considered.

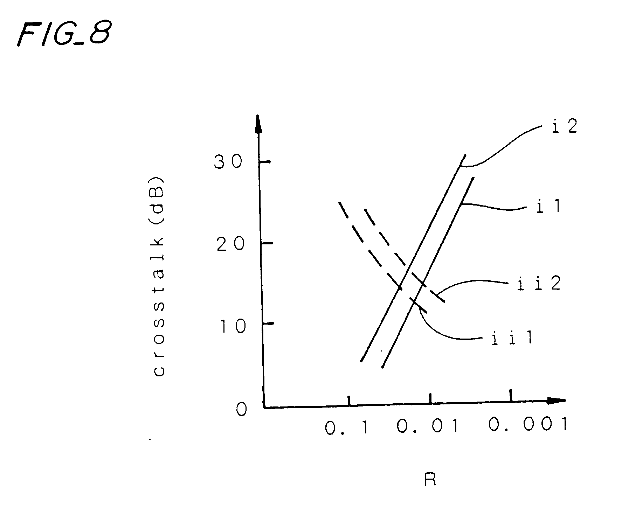

Fig. 8 shows one example of a result obtained by a numerical analysis for optimizing R, in Fig. 8, vertical axis shows crosstalk, and horizontal axis shows the ratio of min/max coupling coefficient. Curves i1 and i2 show crosstalk characteristics as calculated from the deviation (optical power ratio) of normal mode at waveguide route at the ends of the curved parts, curves ii1 and ii2 show crosstalk characteristics estimated from "γₚ" (This crosstalk characteristic is a standard target, and is not an exact value.) In numerical analysis in Fig. 8, curves il and iil show crosstalk characteristic at m = 2, K₀·L = 60, and Δβ·L/π = 1, also, crosstalk characteristics are shown with curves i2 and ii2 with Δβ·L/π = 2.

With increase of R, "γₚ" is reduced, thus, the crosstalk estimated from " γₚ" is improved as shown in Fig. 8. While, with the increase of R, it is difficult to set power-ratio 1 0 or 0 1 for the normal mode at the ends of the curved portions of the waveguide routes 12 and 14, and thus the crosstalk becomes worse which is obtained from optical power ratio at the finishing ends of the curved portions.

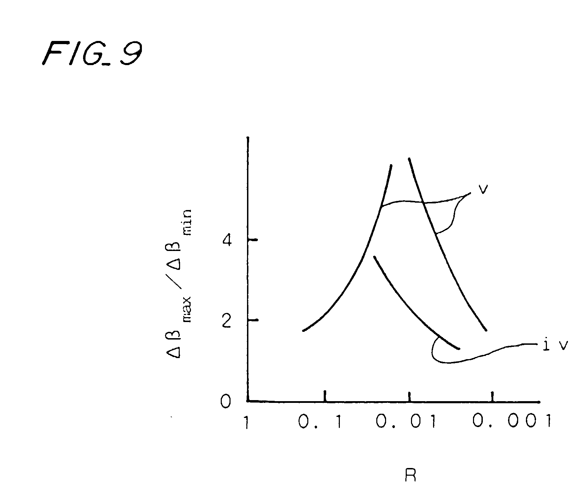

Fig. 9 shows the diagram of one example of a result obtained from a numerical analysis for optimizing K₀·L. In Fig. 9, vertical axis shows Δβₘₐₓ/ Δβₘᵢₙ, and horizontal axis shows the ratio R of min/max coupling coefficient. In the results of the numerical analysis shown in Fig. 9, curve iv shows the relation between R and Δβₘₐₓ/Δβₘᵢₙ in case of m = 2 and K₀·L = 30. Curve v shows the relation between R and Δβₘₐₓ/Δβₘᵢₙ in case of m = 2 and K₀·L = 60.

Crosstalk is improved by increasing the drive voltage by input of drive voltage from its 0 value, while, in improving process, Δβₘᵢₙ shows the value of Δβ when crosstalk becomes -15dB initially. Then, by further increase from Δβₘᵢₙ, crosstalk is aggravated with larger conversion of mode at the branch-side border of electrode by increase of Δβ. In this aggravating process, Δβₘₐₓ shows the value of when it becomes -15dB initially. Accordingly, larger Δβₘₐₓ/Δβₘᵢₙ results in wider drive voltage range obtaining the crosstalk characteristic suitable for practical applications. By numerical analysis, 0.003 < R < 0.03 is better, and R ≃ 0.01 is more preferable, also, K₀·L > 40 is desirable, as found. However, in expression of waveguide route distance ω as in formula (13), the effect of characteristic change of K₀·L is weak, thus, K₀.L > 40 may not necessarily be applied.

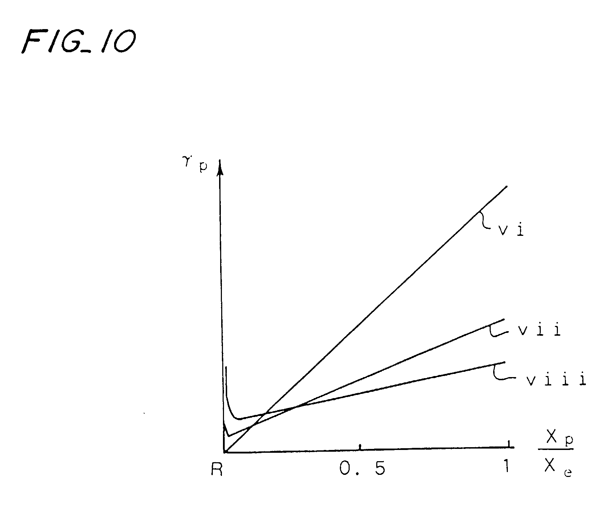

Fig. 10 shows a diagram for explaining the dependency of index γ on m of peak γₚ. Vertical axis in Fig. 10 shows the value of peak γₚ, and horizontal axis shows the value by taking Xₚ/Xₑ. In analysis of Fig. 10, curves vi, vii and viii show the changes of peak γₚ in case of R = 0.01, m = 1, 2 and 3. Xₚ/Xₑ shows the value in proportion to the inverse number of drive-voltage.

In case of m = 1, it is equivalent to the case with linear waveguide route from τ = 0 to τ = 1 of waveguide routes 12 and 14, also, m = 2 and 3 is equivalent to the case of curved waveguide route from τ = 0 to τ = 1 of waveguide routes 12 and 14. As understood from curves vi, vii and viii, when the parts at τ = 1 from τ = 0 of waveguide routes 12 and 14 are formed as curved waveguide route, the peak γₚ can be made small as a whole with smaller peak γₚ at low operation voltage, thus, crosstalk characteristic increase can be expected.

With m = 2 and 3, opening angle is larger at around Xₚ/Xₒ =R, thereby, γₚ is larger, thus, $\text{ω = α·} \sqrt[\text{m}]{\text{L}} \text{·} \sqrt[\text{m}]{{\text{τ+τ}}_{\text{0}}}$ is preferable, and in case of $\text{ω = α·} \sqrt[\text{m}]{\text{L}} \text{·} \sqrt[\text{m}]{{\text{τ+τ}}_{\text{0}}}$ above analysis can be considered to be permitted approximately.

In this analysis, waveguide route interval ω is set to be $\text{ω = α·} \sqrt[\text{m}]{\text{L}} \text{·} \sqrt[\text{m}]{{\text{τ+τ}}_{\text{0}}}$ (whereas, m is a real number larger than 1) is proved to be better. α and τ₀ are contents set optionally with the design, and it is expressed as τ₀ = Z₀/L. Also, 0.003 < R < 0.03 is preferable, and R ≃ 0.01 is more preferable. It is preferable to form the waveguide route of a waveguide route system to preserve the normal mode for fulfilling the formula.$\frac{\text{2·K(τ)}}{\text{dω/L·dτ}} \text{> 0.43}$

In the formation of waveguide routes 12 and 14, symmetric arrangement may be made on Z-axis for the inside edge a1 of waveguide route 12 and inside edge b1 of waveguide route 14, thereby, each position of inside edge a1 of waveguide route 12 and inside edge b1 of waveguide route 14 may be set distant by D/2 in vertical direction to Z-axis from Z-axis.

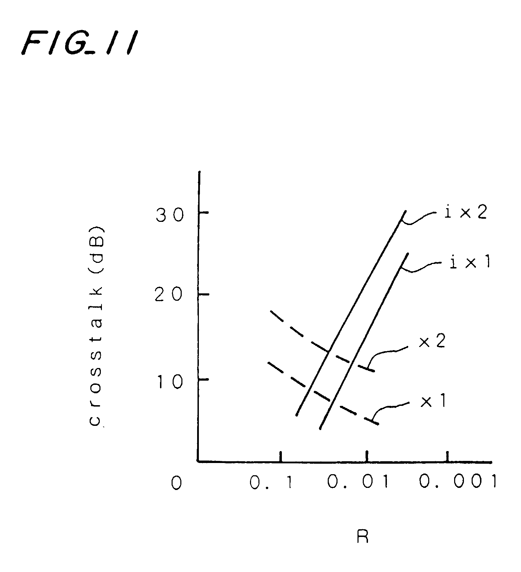

Fig. 11 shows one example of crosstalk characteristic in case of m = 1 and from τ = 0 up to τ = 1 as linear waveguide route. Fig. 11 is the same diagram as that of Fig. 8, and curves ix1 and ix2 show waveguide routes calculated from the deviation of the normal mode on the waveguide route at the electrode terminal end. Curves x1 and x2 show crosstalk characteristics estimated from γₚ. In the numerical analysis of Fig. 11, crosstalk characteristics are shown with curves ixl and xl in case of m = 1, K₀·L = 60 and Δβ·L/π = 1. Curves ix2 and x2 show crosstalk characteristics in case of m = 1, K₀ L = 60 and Δβ·L/π = 2. As understood by Figs. 8 and 11, crosstalk characteristics will be increased by curve form rather than linear waveguide route in a zone from τ = 0 to τ = 1.

### Second Embodiment:

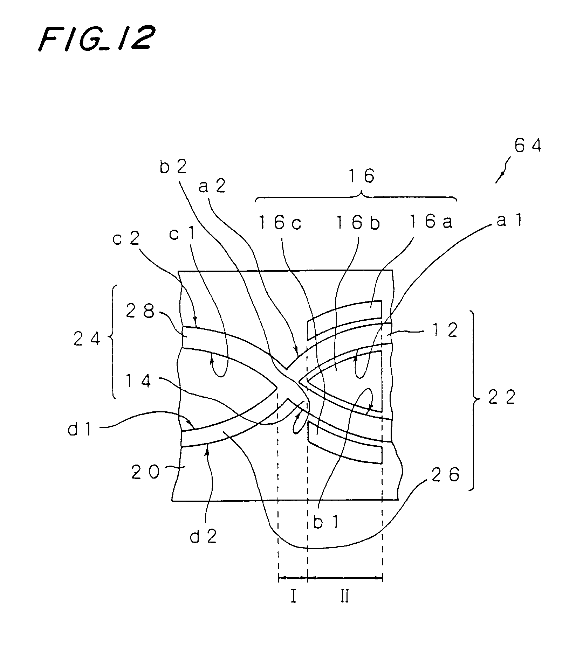

Fig. 12 shows plan view in outline for the constitution of the second embodiment of this invention. The same symbols are used for showing the factors or components of constitution corresponding to those of first embodiment.

The following shows the description of points different from those of the first embodiment, and those same points are abbreviated on those details.

The first embodiment discloses the examples applying this invention for an optical switch of Y-branch type structure. This second embodiment shows the examples applying this invention for an optical switch of X-branch type structure.

As shown in Fig. 12, a waveguide type optical switch 64 of the second embodiment comprises two straight advancing waveguide routes 22 and 24 which are crossing to form an X-branch. The straight advancing waveguide route 22 comprises first waveguide route 12 and first incidence (input) side waveguide route 26 connecting one-side terminals thereof to each other. The other straight advancing waveguide route 24 comprises the second waveguide route 14 and second incidence (input) side waveguide route 28 connecting one-side terminals thereof each other.

In this embodiment, the width of first incidence side waveguide route 26 is more narrowed than that of second incidence side waveguide route 28, to thereby cause a Δβ structurally. The width of first and second waveguide routes 12 and 14 is equal. Inside edge c1 of the waveguide route 28 on the side of waveguide route 26 thereof and inside edge d1 of the waveguide route 26 on the side of waveguide route 28 thereof are similarly arranged as the inside edge a1 and b1 of waveguide routes 12 and 14. Outside edge c2 of the waveguide route 28 on the side remote from the waveguide route 26 and outside edge d2 of the waveguide route 26 on the side remote from the waveguide route 28 are arranged in parallel with the inside edges c1 and d1, respectively.

### Third Embodiment:

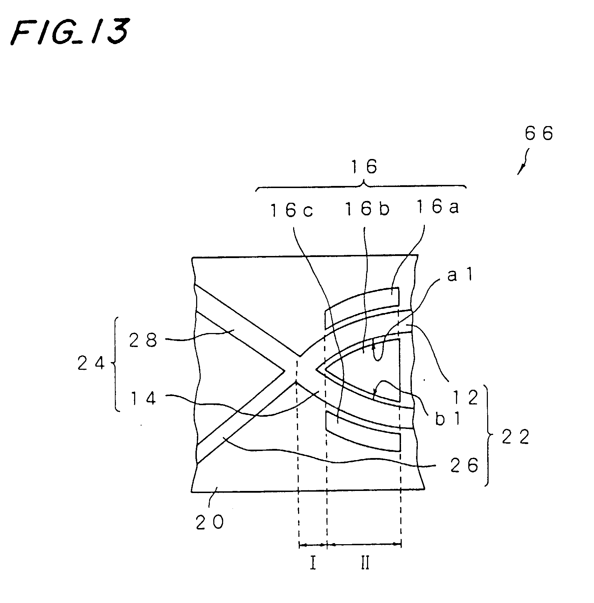

Fig.13 is schematical plan view showing the composition of the third embodiment of this invention. Same symbols are used for all components of the structures of the above mentioned embodiments.

At the waveguide-type optical switch 66 of the third embodiment, first and second straight advancing waveguide routes 26 and 28 are straight or linear waveguide routes, and others are the same in structures of the second embodiment.

### Fourth Embodiment:

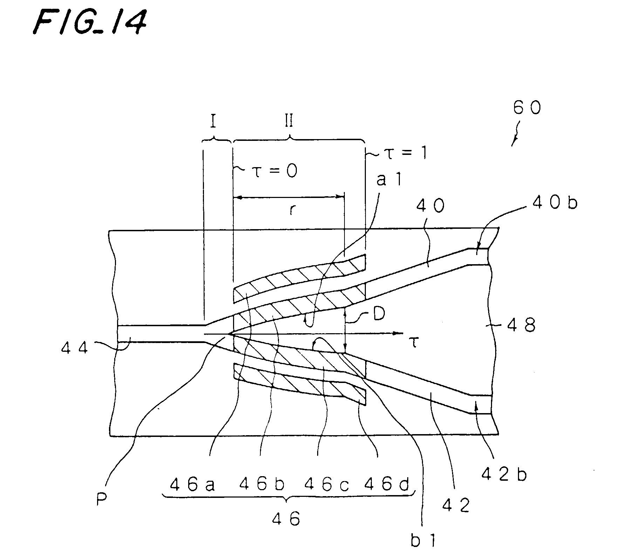

Fig. 14 is schematical plan view showing structure of the fourth embodiment of this invention.

Waveguide-type optical switch 60 of the fourth embodiment is provided with the branched first and second routes 40 and 42, and electrode 46 for controlling the propagation-constant difference or refractive index difference between the first and second waveguide routes 40 and 42. The distance between the two waveguide routes 40 and 42 extends from the branch part I of waveguide routes 40 and 42 towards the terminal parts 40b and 42b, as shown in Fig. 14.

At least a curved portion II is provided at each of two waveguide routes 40 and 42, and local branch angle or opening angle of waveguide routes 40 and 42 is enlarged on the starting side (τ = 0) of the curved portion II, and local branch angle of waveguide routes 40 and 42 on the end side of the (terminal)(τ = 1) curved portion II is reduced. In this embodiment, the local branch angle at curved portion II of the waveguide routes 40 and 42 is gradually reduced from the starting side (τ = 0) to the end side (τ =1) to make a smoothly curved waveguide route shape at the curved portion II. The local branch angle is gradually reduced up to τ= r, and it is less than the local branch angle at τ = 0 or neighborhood thereof from τ= r to τ = 1.

In more detailed description, waveguide-type optical switch 60 of this embodiment is provided with waveguide routes 44, 40 and 42 composing the Y-branch and electrode 46 provided for the branched waveguide routes 40 and 42.

The Y-branch is formed by connecting starting side parts of waveguide routes 40 and 42 to the end part of waveguide route 44. These waveguide routes 40, 42 and 44 are provided on the substrate 48. The substrate 48 can change the refractive index electrically, for instance, it can be Z-cut LiNbO₃ substrate.

Electrode 46 comprises electrode members 46a, 46b, 46c and 46d. The electrode member 46a is located beside the waveguide route 40 on the side thereof remote from the waveguide route 42. The electrode member 46b is arranged on waveguide route 40. The electrode member 46c is arranged on waveguide route 42. Also, the electrode member 46d is located beside the waveguide route 42 on the side thereof remote from the waveguide route 40. These electrode members 46a to 46d are provided on the substrate 48. Electrode-starting end position is set to τ = 0 and electrode finishing end position is set to τ = 1. Each electrode member 46a to 46d extends from τ = 0 to τ = 1.

The first and second waveguide routes 40 and 42 form a system to preserve or hold the normal mode in a zone between finishing end (τ = 0) of branched part I and the end (τ= 1) of the curved portion II of these routes 40 and 42. Accordingly, this waveguide routes system is provided with the branched part I, curved portion II and at least two waveguide routes 40 and 42.

Branched part I divides the optical power of normal mode of this waveguide route system equally into two waveguide routes 40 and 42, for which, the center line of each waveguide of branch part I has the linear symmetric shape on τ-axis.

Terminal (finishing) part of the curved portion II of two waveguide routes 40 and 42 (waveguide route part at τ = 1 or its neighborhood) concentrates optical power of normal mode of waveguide route system into either one of two waveguide routes 40 and 42.

The finishing end parts of the curved portions II of two waveguide routes 40 and 42 are separated each other in such a direction that, under the applying condition of voltage to the electrode 46, field distribution (or optical power strength distribution) of normal mode can exist at electrode terminal part of one of the waveguide routes 40 and 42, whereas, can not exist at electrode terminal part of the other of the waveguide routes. At the same time, the distance between the waveguide routes in a zone from electrode terminal part of waveguide routes 40 and 42 up to the finishing parts 40b and 42b (waveguide route part to be τ > 1) is equal to or wider than the distance between the waveguide routes at the finishing part of the bending portion II. The Waveguide route part with τ > 1 may be omitted.

Next, by numerical analysis, the shape of the curved portion II of this embodiment is described. The distance D between the waveguide routes is regarded as function of the specified distance τ. The specified distance τ is a distance obtained by specifying a distance Z by element length (electrode length) for distance Z. τ = 0 shows the starting position (position corresponding to Z = 0) of the curved portion II. τ = 1 shows the end position (position corresponding to Z = L) of the curved portion II. In the following analysis, the range of 0 ≦ τ ≦ 1 is considered. The τ-axis is an axis set to pass the branch point P on the substrate, and with respect to the τ-axis the center lines of waveguides are symmetrical.

For improving the crosstalk characteristics, it is necessary to hold the conversion small in between even mode and odd mode, then, the index γ in case of interval D between waveguide routes regarded as a function of specified distance τ is shown by the following formula (17):$\text{γ =} \frac{\text{1}}{\text{2 · Δβ · L}} \text{·} \frac{{\text{X}}^{\text{2}}}{{\text{(X}}^{\text{2}} {\text{+ 1)}}^{\text{3/2}}} \text{·} \frac{\text{dω}}{\text{dτ}}$
Whereas, ω = S·(D - D₀)
D₀ shows the distance between the waveguide routes at τ = 0.
Δβ shows the propagation constant difference caused electrically between waveguide routes 40 and 42 at the curved portion II. L shows the distance from the starting side of the curved portion II to the end (from τ = 0 to τ = 1). X = Δβ/(2·K(τ)) and K(τ) show the coupling coefficient between waveguide routes 40 and 42 at the specified distance. K(τ) is expressed by the following formula (18).
${\text{K(τ)=K}}_{\text{0}} {\text{·e×ρ{-s·(D(τ)-D}}_{\text{0}} \text{)}}$

As understood from formula (17), index γ is expressed by local branch angle dω/dτ, inverse number of phase difference 1/2·Δβ·L and F = X²/(X² + 1)^{3/2}.

F contains K(τ), and a function of having peak at $\text{X =} \sqrt{\text{2}} {\text{= X}}_{\text{p}} {\text{. τ}}_{\text{p}}$ position of Xₚ changes in proportion to the voltage. As K(τₚ) is expressed as K(τₚ) = Δβ/2·Xₚ then, position τₚ is expressed as τₚ = K⁻¹(Δβ/2·Xₚ) with change of Δβ. K⁻¹ is an inverse function of K.

Here, by connecting the mutual ends of one side of two straight waveguide routes, a branch is formed, and distance D between the waveguide routes getting distance from the branch is widened, and the waveguide route system is formed to preserve the normal mode by these straight waveguide routes (for instance, cases of waveguide routes 3 and 4 shown in Fig. 1), then, the manner of change of index γ of mode conversion is described as follows:

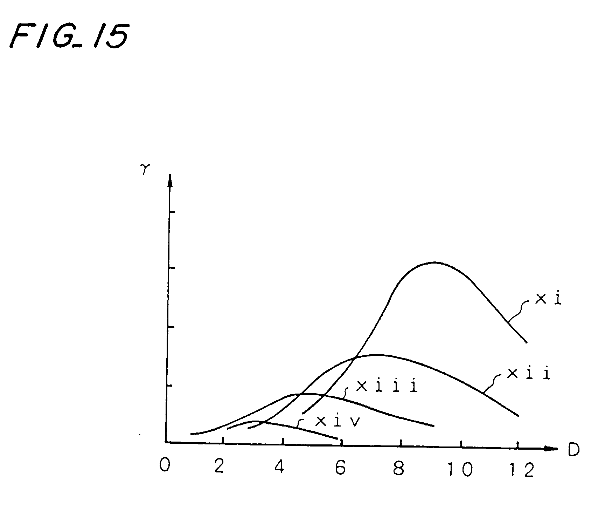

Fig. 15 shows the diagram on the manner of change of index γ. For preparing Fig. 15, as shown in Fig. 1, for instance, survey is made by numerical analysis on the changing manner of distribution of index γ of mode conversion with increase of drive voltage. As a result, its analyzed result was shown in vertical axis. Distance D between waveguide routes of these straight waveguide routes are taken in the index and horizontal axis, as shown in Fig. 15. Whereas, in numerical analysis, wave length of normal mode is set to 1.3 µm, relative refractive index difference between a substrate and waveguide routes Δ = 0.1 %, waveguide route width is set to 7 µm, refractive index difference Δn caused in between two waveguide routes by input of drive voltage is set as Δn = 5 x 10⁻⁵, 1 x 10⁻⁴, 2 x 10⁻⁴ and 5 x 10⁻⁴. Then, the values of index γ on the waveguide routes at position of interval D between waveguide routes are plotted to show in curves which are shown with each symbol of xi, xii, xiii and xiv. While, Δβ = ("2π"/"wavelength of normal mode")·Δn.

As shown in Fig. 15, the value of index γ is distributed in mountain-form in between the finishing end and starting end of two waveguide routes, and index γ has the peak γₚ at the distance D between the specific waveguide routes. With the increase of drive voltage, Δn increases, then, position of peak γₚ is transferred to the narrow side of distance D of the waveguide routes from the wide side of distance D of the waveguide routes, and also, the value of peak γₚ decreases.

On the other hand, index γ is proportional to the local branch angle dω/dτ (see the formula (17)). Even if Δβ increases, the value of peak γₚ can be held constant by greater local branch angle at the branch of two waveguide routes, namely, at small interval D of the waveguide routes.

By using $\text{X = Δβ/2·K =} \sqrt{\text{2}} {\text{= X}}_{\text{p}}$ and formula (18), the interval Dₚ between the waveguide routes at position inducing the peak γₚ is expressed by the formula (19).

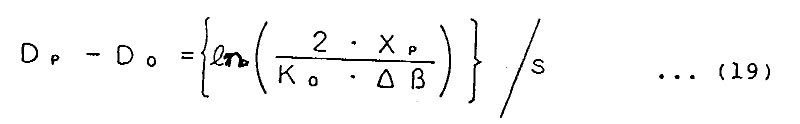

In this embodiment, peak γₚ is considered constant regardless of Δβ.

At the position to be the peak γₚ (peak position), Δβ = Xₚ · 2 · K( τ ) is obtained, then, the following formula (191) is obtained by formula (17).${\text{γ}}_{\text{p}} \text{=} \frac{\text{X}}{{\text{2 · (X}}^{\text{2}} {\text{+ 1)}}^{\text{3/2}}} \text{·} \frac{\text{1}}{\text{2 · K · L}} \text{·} \frac{\text{dω}}{\text{dτ}}$

By using formula (18), formula (191) is deformed, then, the following formula (20) is obtained.$\frac{{\text{Δ · γ}}_{\text{p}} {\text{· (X}}_{\text{p}} {}^{\text{2}} {\text{+ 1)}}^{\text{3/2}}}{{\text{X}}_{\text{p}}} {\text{·K}}_{\text{o}} \text{·L} \text{= e × ρω ·} \frac{\text{dω}}{\text{dτ}}$

In considering the left side of formula (20) constant, both sides of formula (20) are integrated, and the following formula (21) is obtained. 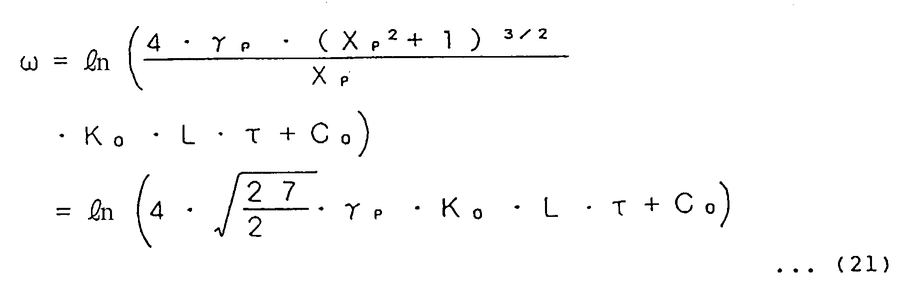 Where, K = K₀ at τ = 0, then, C₀ = 1.

Thus, in expressing ω by logarithm function of τ, regardless of size of Δβ and so, regardless of drive voltage, the value of γₚ can be constant, and mode-converting amount can may be made constant.

For producing the optical switch, in addition to γₚ, there are such important parameters as R(min/max coupling coefficient ratio) at τ = 0 and τ = 1. At τ = 0, by increasing the concentrating degree of field distribution or optical power strength distribution of normal mode at one of the waveguide routes, optical power ratio of normal mode of the waveguide routes 40 and 42 at τ = 1 is proximated to 1 : 0 or 0 1. Also, it is necessary to reduce R for decreasing the conversion of mode induced at τ = 0 by the influence of Δβ caused with input of voltage. For reducing the mode conversion at τ = 0, it is necessary to reduce X₀ =Δβ/K₀ (X₀ is a value of X at τ = 0). For enlarging the mode concentration at τ = 1, it is necessary to increase Xₑ = Δβ/Kₑ (Xₑ is a value of X at τ = 1), thus, X₀/Xₑ = Kₑ/K₀ = R should be reduced.

However, a smaller R will induce a larger mode conversion when optical propagation is made from τ = 0 to τ = 1, therefore, R should be optimized. Optimum range of R is 0.003 < R < 0.03, and more preferably, R = 0.01 regardless of function type showing the shape of waveguide route.

Also, Kₑ/K₀ = exp[-{s D(1) - S · D₀}] = R, thus, by formula (21), 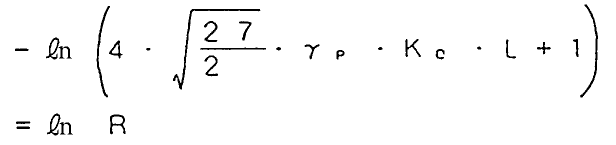 Then, the following formula (22) is obtained.${\text{γ}}_{\text{p}} \text{=} \frac{{\text{R}}^{\text{-1}} \text{- 1}}{{\text{K}}_{\text{0}} \text{· L}} \text{·} \frac{\text{1}}{\text{4}} \text{·} \sqrt{\frac{\text{2}}{\text{27}}}$

From this equation (22) and (21) noted above, we have ω = ln [(R⁻¹ - 1)τ + 1].

When the portions of waveguide routes from τ = 0 up to τ = 1 are regarded as straight waveguide routes, γₚ is expressed by the following formula (23).${\text{γ}}_{\text{p}} \text{=} \frac{\text{1}}{{\text{Δβ·K}}_{\text{0}}} \text{·} \frac{\text{1}}{\sqrt{\text{27}}} \text{· (- ln R)} \text{=} \frac{\text{1}}{{\text{K}}_{\text{0}} \text{· L}} \text{·} \frac{\text{1}}{\text{2 · R}} \text{·} \frac{\text{2 · K (1)}}{\text{Δβ}} \text{·} \frac{\text{1}}{\sqrt{\text{27}}} \text{· (- ln R)} \text{=} \frac{{\text{R}}^{\text{-1}}}{{\text{K}}_{\text{0}} \text{· L}} \text{·} \frac{\text{1}}{\text{4}} \text{·} \sqrt{\frac{\text{2}}{\text{27}}} \text{·} \frac{{\text{X}}_{\text{p}}}{{\text{X}}_{\text{e}}} \text{· (- ln R)}$

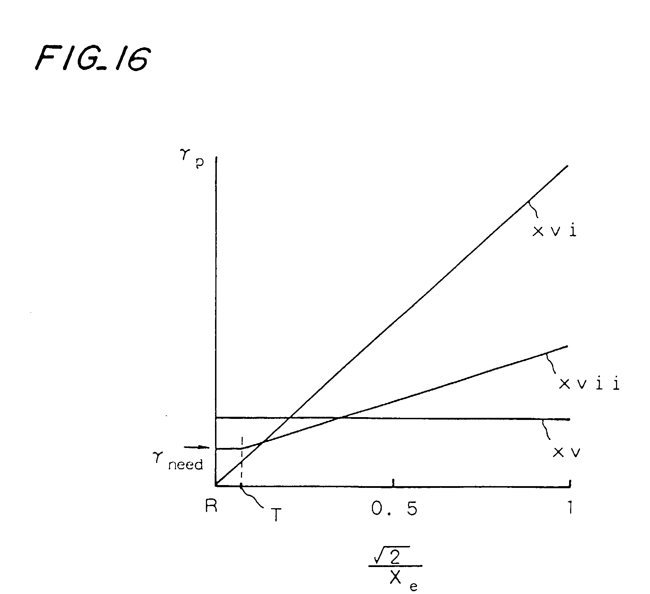

Fig. 16 shows a diagram on the manner of change of γₚ against Xₚ/Xₑ, and γₚ is taken in vertical axis, Xₚ is taken on horizontal axis. Curves xv and xvi show the changes of γₚ obtained from the formulae of (22) and (23).

Xₚ/Xₑ = (2 · Kₑ · Xₚ)/Δβ is proportional to the inverse number of drive voltage. With Xₚ/Xₑ = 1, position of peak γₚ is at the position of τ = 1, then, the position of peak γₚ with Xₚ/Xₑ = R, the position of peak γₚ is expressed as follows:$\frac{{\text{2 · K}}_{\text{e}} \text{/R}}{\text{Δβ}} {\text{· X}}_{\text{p}} \text{=} \frac{{\text{2 · K}}_{\text{0}}}{\text{Δβ}} {\text{· X}}_{\text{p}} \text{=} \frac{{\text{X}}_{\text{p}}}{{\text{X}}_{\text{0}}} \text{= 1}$ Thus, the position of γₚ is at the position of τ = 0. As understood by curves xv and xvi, γₚ becomes smaller at $\sqrt{\text{2}} {\text{/X}}_{\text{e}} \text{≃ 1}$ by setting the waveguide route in a zone from τ = 0 to τ = 1 as the logarithm type waveguide route (corresponding to curve xv) expressed by logarithm function of "τ" rather than making it a straight waveguide route (corresponding to curve xvi). Accordingly, it is expected that mode conversion can be reduced by lower drive voltage, and then, it would be possible to obtain crosstalk characteristics suitable for practical use.

Mode conversion would not be fully reduced without making peak γₚ less than $\text{1/(2·} \sqrt{\text{27}} \text{)~1/(3·} \sqrt{\text{27}} \text{)}$, where, the peak γₚ to be less than $\text{1/(2·} \sqrt{\text{27}} \text{)~1/(3·} \sqrt{\text{27}} \text{)}$ is expressed as γ_{need}.

In forming the waveguide route, if the coupling cofficient K₀ is made stronger or larger through a technique such, for example, as disclosed in The Literature "IECE Technical Report OQE 83 - 87 (1983)" to make an increase in the value of K₀.L more than 60, a waveguide route of logarithm type may be formed in the zone from τ = 0 to τ = 1. However, the value of the product K₀·L is usually in a range of about 30 to about 60. In this case, by the formula (22), it is rather unreasonable to obtain fully small γₚ in the formation of only waveguide route of logarithm type in the zone from τ = 0 to τ=1.

Accordingly, considering the use of a straight waveguide route on the side of τ = 1 and waveguide route of logarithm type on the side of τ = 0, to form curved portions of waveguide routes. On the side of τ = 0, γₚ can be reduced even by enlarging the local branch angle, so that by enlarging the local branch angle especially at or neighborhood of τ = 0, waveguide route distance D is opened up to a distance obtaining the desired R = Kₑ/K₀. On the side of τ = 1, the distance D of waveguide routes is opened up to a distance obtaining the desired R = Kₑ/K₀ by the straight waveguide route on the side of τ = 1.

For shortening the device length (electrode length), it is very efficient to use the waveguide route of logarithm type. Then, by using logarithm type waveguide route having γₚ ≃ γ_{need}, and extending the distance D therebetween, after then, by using the straight waveguide routes, waveguide routes distance D is widened up to a desired interval in a remaining zone up to τ = 1. Thereby, the variation of γₚ in case of the waveguide-route-shape at the zone from τ = 0 to τ = 1 is expressed by curve xvii in Fig. 16. In curve xvii, a section of $\sqrt{\text{2}} {\text{/X}}_{\text{e}}$ from R to T and that from T to 1 show the variation of γₚ on straight waveguide route and logarithm type waveguide route, respectively.

Description is made for the fact that it is beneficial to use the waveguide route of logarithm type for shortening the device length.

For instance, in considering the distance Lᵢ needed to open the distance between waveguide routes up to the state K/K₀ = Rᵢ, by the formula (22) on the waveguide route of logarithm type, the following formula can be obtained.${\text{L}}_{\text{i}} \text{=} \frac{{\text{R}}_{\text{i}} {}^{\text{-1}} \text{- 1}}{{\text{K}}_{\text{0}} {\text{· γ}}_{\text{need}}} \text{·} \frac{\text{1}}{\text{4}} \text{·} \sqrt{\frac{\text{2}}{\text{27}}}$ Also, by the formula (23) on straight waveguide route, the following formula can be obtained.${\text{γ}}_{\text{p}} \text{=} \frac{{\text{R}}_{\text{i}} {}^{\text{-1}}}{{\text{K}}_{\text{0}} {\text{- L}}_{\text{i}}} \text{·} \frac{\text{1}}{\text{4}} \text{·} \sqrt{\frac{\text{2}}{\text{27}}} \text{·} \frac{{\text{X}}_{\text{p}}}{{\text{X}}_{\text{i}}} {\text{· (- ln R) < γ}}_{\text{need}} \text{∵} \frac{{\text{X}}_{\text{p}}}{{\text{X}}_{\text{i}}} \text{≦ 1}$ Xₚ/Xᵢ becomes 1 at maximum, then, on straight waveguide route, the following formula can be obtained.${\text{L}}_{\text{i}} \text{=} \frac{{\text{R}}_{\text{i}} {}^{\text{-1}}}{{\text{K}}_{\text{0}} {\text{· γ}}_{\text{need}}} \text{·} \frac{\text{1}}{\text{4}} \text{·} \sqrt{\frac{\text{2}}{\text{27}}} {\text{·(- ln R}}_{\text{i}} \text{)}$ Accordingly, it is possible to make distance Lᵢ about (- ℓnRᵢ)⁻¹ times in case of straight waveguide route for the distance Lᵢ in case of logarithm type waveguide route.

Next, consideration is given to a straight waveguide route and a logarithm type waveguide route at the section from τ = 0 to τ = 1.

One consideration (idea) is to minimize the slant of the straight waveguide route. In this case, the length rate of "r" is expressed approximately by the following formula. 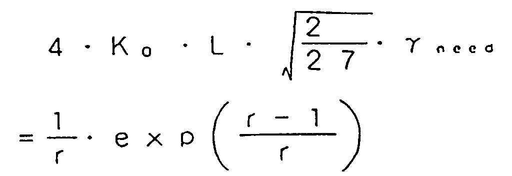 As shown in Fig. 14, straight waveguide route may be taken for the section from τ = r to τ = 1, and logarithm type waveguide route may be taken for the section from τ = 0 to τ = r.

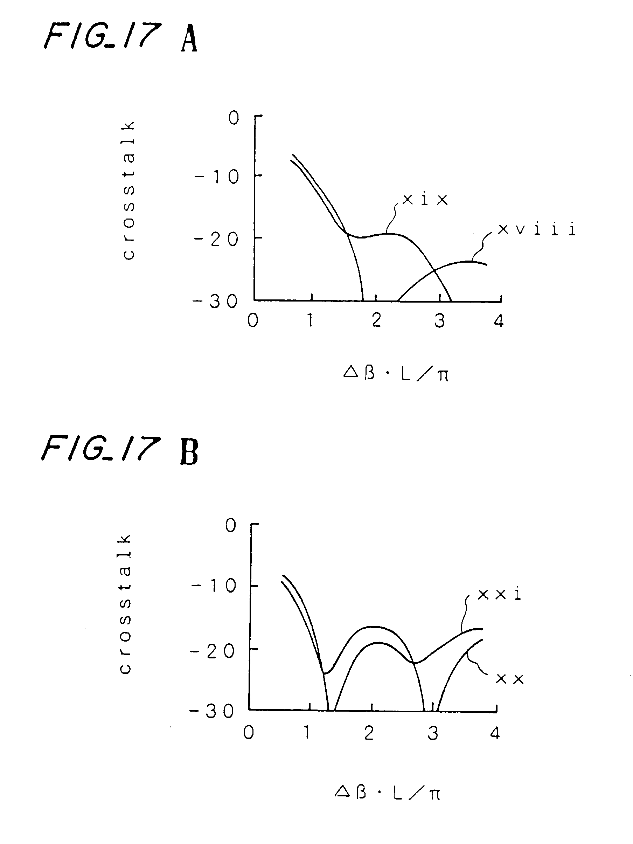

Fig. 17 shows one example of the result of an analysis on crosstalk characteristic in this case. In Fig. 17, vertical axis shows crosstalk, and horizontal axis shows Δβ·L/π. In the analysis of Fig. 17A with R = 0.01, ${\text{γ}}_{\text{need}} \text{= 1/(3·} \sqrt{\text{27}}$), crosstalk characteristics are shown by curves xviii and xix at K₀·L = 30 and 60, respectively. In analysis of Fig. 17B, R = 0.01, and ${\text{γ}}_{\text{need}} \text{= 1/(2·} \sqrt{\text{27}}$), crosstalk characteristics are shown with curves XX and XXi st K₀·L = 30 and 60, respectively.

Another idea is as follows: For concentrating the field distribution of normal mode to the one of waveguide routes, ideally, minimum essential value Xₑ is obtained to make 0 : 1 or 1 : 0 of optical power ratio of the waveguide routes 40 and 42 at τ = 1 (in this case, Xₑ is expressed as X_{ef}). Then, peak of γₚ is obtained at Xₑ = X_{ef}. And then, logarithm type waveguide route is taken for the section from τ = 0 up to peak position in this case, and also, straight waveguide route is taken for the section from the peak position to τ = 1. Coupling coefficient Kₚ at the position of peak γₚ when Xₑ is set to X_{ef} is shown as follows:${\text{K}}_{\text{p}} {\text{= K}}_{\text{e}} \text{·} \frac{{\text{X}}_{\text{ef}}}{\sqrt{\text{2}}}$ By Rᵢ Kₑ = Kₚ, the following relation is obtained.

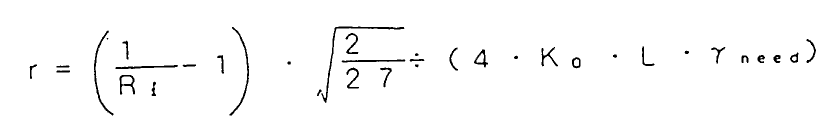

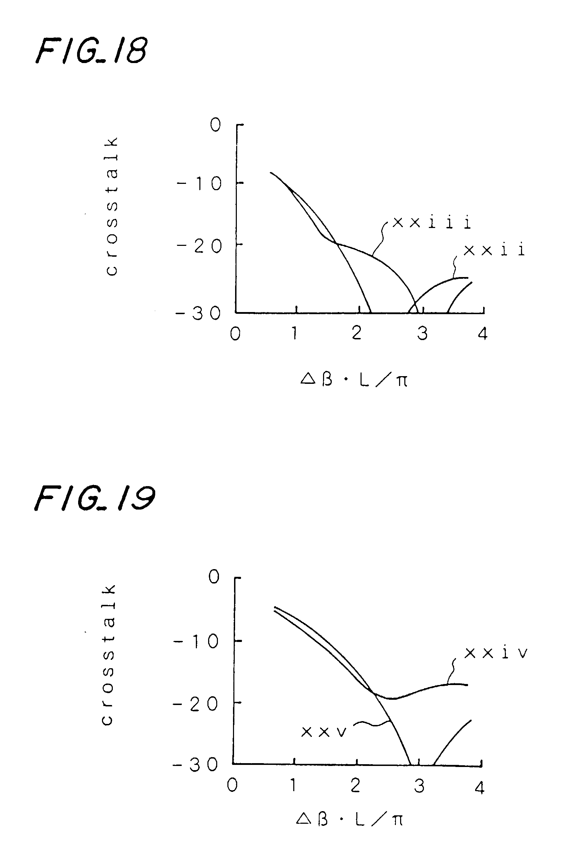

Fig. 18 shows one example of the result of the analysis on crosstalk characteristics in this case. In analysis on Fig. 18, crosstalk characteristics in case of R = 0.01 and γ_{need} = 1/(3· 27) are shown by curves xxii and xxiii at K₀·L = 30 and 60, respectively.

Fig. 19 shows one example of the result of the analysis on crosstalk characteristics in case of straight waveguide route from τ = 0 to τ = 1. In Fig. 19, the crosstalk characteristics in case of R = 0.01 are shown by curves xxiv and xxv at K₀·L = 30 and 60, respectively.

In Figs. 17 to 19, Δβ·L/π for obtaining the crosstalk characteristics suitable for practical uses in cases of a straight waveguide route in a zone from τ = 0 to τ = 1 is nearly 1.5 times than that of the case where a waveguide route comprises a logarithm type waveguide route in a zone from τ = 0 to τ = r and a straight waveguide route from. τ = r to τ = 1. Accordingly, with this embodiment, drive voltage might be reduced over 70 % as compared with conventional cases.

In this embodiment, Δβ·L/π of the case of extinction ratio or optical disappearing ratio over 10dB is about 60 to about 70 % of the conventional cases, thus, its level of drive voltage can be reduced. As shown in Figs. 17 and 18, it is possible to extend the range of drive voltage despite obtaining the crosstalk less than -20dB.

In the above description of the embodiment, the examples shown in Fig. 14 shows a wider local branch angle between the straight waveguide routes than that between logarithm type waveguide routes at τ= r. However, it is more preferable to make the local branch angle between the straight waveguide routes equal to that between the logarithm type waveguide routes at τ = r.

The above example concerned the straight lined waveguide routes and the logarithmically curved waveguide routes, but it is possible to consider intermediate waveguide routes between the straight lined and logarithmically curved waveguide routes. Two curves I₁ and I₂ may be thought as formulae specifying the shape of curve of center lines of such waveguide routes. When e is a parameter specifying the shape of curve and ω the normalized distance or interval between opposed inside edges of the first and second waveguide routes as noted above, curve I₁ is given as${\text{ω = ln[(R}}^{\text{-1}} \text{- 1)f(τ) + 1].}$ where,${\text{f(τ) = {exp[(-ln R)eτ] - 1}/{exp[(-ℓ}}_{\text{n}} \text{R)e - 1}} \text{0 ≦ e ≦ 1, τ = Z/L.}$ If the parameter is e = 0, it specifies a logarithmic curve, while e = 1 specifies a straight line. By setting the parameter e to a suitable value of 0 < e < 1, an intermediate curve between straight line and logarithmic curves can be obtained.

Curve I₂ is given as${\text{ω = ln (R}}^{\text{-1}} {\text{) {ln[(R}}^{\text{-1}} {\text{- 1)eτ + 1]}/ {ln[(R}}^{\text{-1}} \text{- 1)e + 1]}}$ where,$\text{0 ≦ e ≦ 1, τ = Z/L.}$ In this case, e = 0 specifies a straight line while e = 1 specifies a logarithmic curve. Again in this case, by setting the parameter e to a suitable value as 0 < e < 1, it is possible to obtain an intermediate curve between a straight line and logarithmic curves.

### Deformed example of fourth embodiment

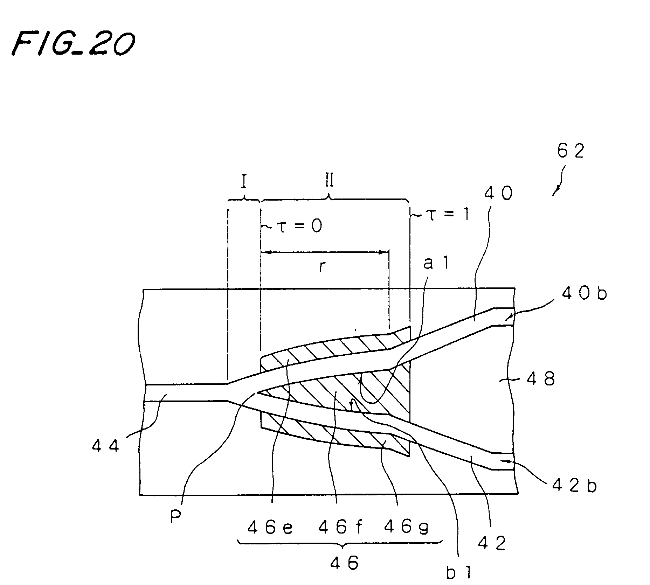

Fig. 20 is a plan view schematically showing the constitution of deformed example of the above-mentioned fourth embodiment. In this deformed example of a waveguide type optical switch 62, for example, X-cut LiNbO₃ is used as a substrate 48, and an electrode 46 comprises electrode members 46e, 46f and 46g. The electrode member 46e is arranged beside the waveguide route 40 on the side thereof remote from the waveguide route 42. The electrode member 46f is arranged between waveguide routes 40 and 42, and the electrode member 46g is arranged beside the waveguide route 42 on the side thereof remote from the waveguide route 40. As in the above, electrode structure an be changed suitably to match the substrate substance or material optionally.

### Fifth embodiment:

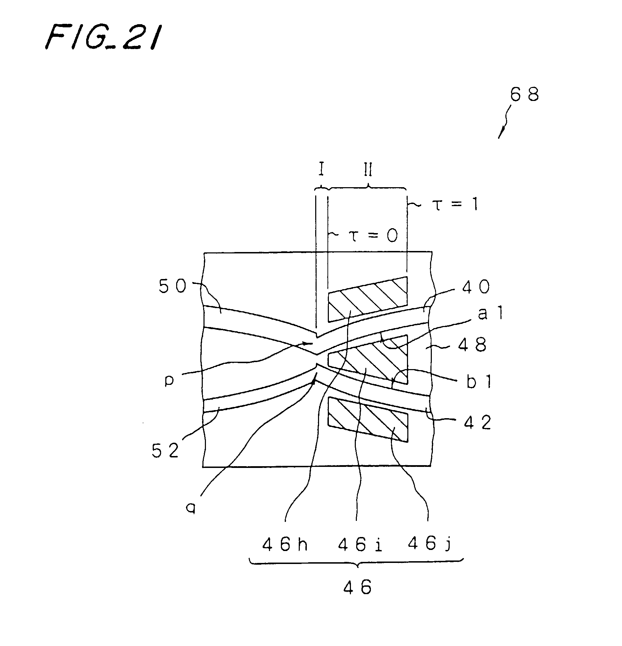

Fig. 21 is a plan view schematically showing the structure of fifth embodiment of this invention. Same symbols are given to the constructional components corresponding to the above-mentioned ones shown in Figs. 14 and 20.

An optical switch 68 of the fifth embodiment is provided with waveguide routes 40, 42, 50 and 52 forming an X-branch, and an electrode 46 comprising electrode members 46h, 46i and 46j.

The waveguide routes 40 and 42 are set, from their one end to the other end, as logarithm type branched waveguide routes expressed by the above-mentioned formula (22), and similarly, the waveguide routes 50 and 52 are set, from their one end to the other end, as logarithm type branched waveguide route expressed by the above mentioned formula (22).

The waveguide routes 40 and 42 have equal width. The one end part of the waveguide route 50 having a route wider than that of this waveguide route 40 is connected to the one end part thereof, and also, the one end part of the waveguide route 52 having a route narrower than that of waveguide route 42 is connected to one end part thereof. In Fig. 21, symbol q is put on the connection part of waveguide routes 42 and 52, and symbol p on the connection part of waveguide routes 40 and 50. The connecting parts p and q are separated from each other.

Moreover, the electrode member 46h is located beside the waveguide route 40 on the side thereof remote from the waveguide route 42. The electrode member 46i is arranged between the waveguide routes 40 and 42. The electrode member 46j is located beside the waveguide route 42 on the side thereof remote from the waveguide route 40. These electrode members 46h to 46j are extendingly arranged from the starting to the finishing end parts of the curved portion II.

Next, the operation of an optical switch according to this embodiment is briefly explained.

With optical input to the waveguide 50, even mode optical excitation occurs on the waveguide 50, and this even mode rays are equally divided on its power at the connecting portions p and q. Even mode rays with equal power are input to the waveguide routes 40 and 42 at the branch part I. In this case, voltage is input to the electrode 46 to induce a difference of the refractive index between the curved portions II of waveguide routes 40 and 42, thereby to output from the waveguide route of higher refractive index and not to output from the waveguide route of lower refractive index.

Optical input to the waveguide route 52 excites the odd mode the power thereof being equally divided at the connecting portions p and q. The odd mode rays with equal power are input to the waveguide routes 40 and 42 at the branch part I. In this case, voltage is applied to the electrode 46 to cause a difference of refractive index between curved portions II of waveguide routes 40 and 42, by which the odd mode ray can be output from the waveguide route of lower refractive index and not to output from the waveguide route of higher refractive index.

Optical input to the waveguide route 50 or 52 induces the reverse process of Y-branch, thereby to excite the odd mode or even mode having the field distribution (or optical power strength distribution) with equal division of power at the connecting portions, that is, coupling portion p and q.

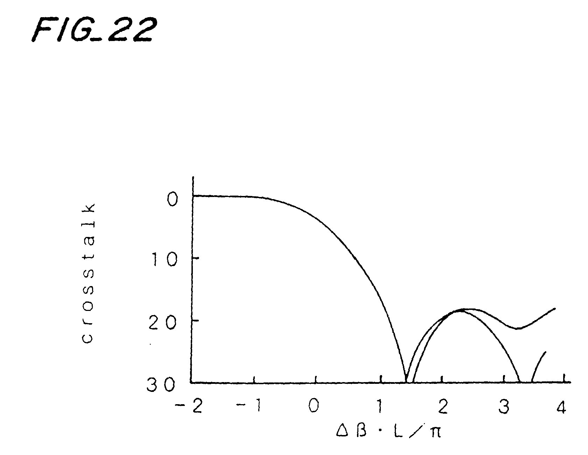

Fig. 22 shows one example of the result of an analysis on crosstalk characteristics of this embodiment. The width of waveguide routes 40 and 42 at the curved portions II may be widened or narrowed more than the width of waveguide routes 40 and 42 at other parts than the curved portions II.

This invention is not restricted to the above-mentioned embodiments, thus, optional and suitable changes can be made for the shape, dimension, arranging position, numerical conditions and other conditions of various factors and components of the structures.

In the above embodiment, LiNbO₃ substrate was choosen as a substrate. However, it is also possible to use other suitable well-known ferroelectric materials or well-known semiconductor materials. Further, the waveguide route may be formed suitably depending on the substrate material used such that the refractive index varies electrically. Further, the electrode shape (in a plane view) may be selected suitably depending on the substrate material or substance. The substrate material or substance may be Au or other suitable conductive one(s). Where semiconductor material(s) or substance(s) are used for the substrate, it is necessary to provide grounding electrodes on the substrate surface on the side thereof opposite the waveguide routes.

As clarified by the above mentioned descriptions, according to a waveguide type optical switch disclosed herein, a curved portion is provided at each part of the branched two waveguide routes, thus, local branch angle (or opening angle) therebetween is enlarged on starting side of the curved portions, while local branch angle is reduced between two waveguide routes on the side of finishing end side of the curved portions. Then, the following effects
i) and ii) can be achieved.
i) When comparing the disclosed optical switch with a conventional one, with the same drive voltage crosstalk characteristics suitable for practical uses can be realized at shorter device-length. With the same device-length a crosstalk characteristics suitable for practical uses can be attained at a lower drive voltage in the instant optical switch than in the conventional one.
ii) Crosstalk characteristics suitable for practical uses can be realized in a wider range of drive voltage than with a conventional switch.

## Claims

1. Waveguide-type optical switch (10; 60; 62) comprising
a substrate (20; 48);
one input waveguide route (18; 44) provided on the substrate;
first and second waveguide routes (12, 14; 40, 42) provided on the substrate and branching from said one input waveguide route (18; 44), the first and second waveguide routes each having an end part (12a, 14a), an intermediate portion (II) connecting to the end part (12a, 14a), and a residual portion (12b; 14b; 40b; 42b) connecting to the intermediate portion (II);
a plurality of electrodes (16; 46) provided on the substrate at positions adjoining to the intermediate portions (II) for controlling the refractive index between the intermediate portions (II);
wherein a branched part (I) being Y-shaped is formed by an end portion of said input waveguide route (18; 44) and the end parts of the first and second waveguide routes (12a; 14a) connecting to the end portion;
wherein the configurations of the first (12; 40) and second (14; 42) waveguide routes are symmetrical to each other;
wherein the distance between the first (12; 40) and second (14; 42) waveguide routes increases with the distance from the branched part (I) toward the residual portion thereof; and
wherein when a starting point (z = 0, τ = 0) of each of the intermediate portions (II) is defined by a boundary between the end part (12a; 14a) belonging to the branched part (I) and the intermediate portion (II), and an end point (z = L, τ = 1) is defined by another boundary between the intermediate portion (II) and the residual portion (12b; 14b; 40b; 42b), the local branch angle between the first and second waveguide routes in a region corresponding to the intermediate portions (II) is changing stepwise or continuously from the starting point toward the end point,
**characterized in**
that each of the intermediate portions (II) comprises a curved waveguide route portion, the local branch angle between the first and second waveguide routes in a region corresponding to the curved waveguide route portion is maximum at said starting point and decreases stepwise or continuously from the starting point towards the end point, wherein said curved waveguide portion is either logarithmically curved, or its shape is given by${\text{ω = α·(z+z}}_{\text{0}} {\text{)}}^{\text{n}}$
wherein ω is a normalized interval between the opposed inside edges (a1, b1) of the first and second waveguide routes (12, 14; 40, 42),
z is the distance measured from the starting end of the intermediate portion towards the terminal end thereof along the direction of the symmetry axis,
α and n are parameters indicating the plane shape of the first and second waveguide routes (12, 14; 40, 42) and positive, and 0 < n < 1 ;
z₀ is a parameter indicating the maximum local branch angle; and
each specified local branch angle dω / dz of the inside edges (a1, b1) is given as
${\text{dω/dz = n · α · (z + z}}_{\text{0}} {\text{)}}^{\text{n-1}} \text{.}$

2. Waveguide-type optical switch (64; 66; 68) comprising
a substrate (20; 48);
two input waveguide routes (26, 28; 50, 52) provided on the substrate;
first and second waveguide routes (12, 14; 40, 42) provided on the substrate and branching from said two input waveguide routes (26, 28; 50, 52), the first and second waveguide routes each having an end part (12a, 14a), an intermediate portion (II) connecting to the end part (12a, 14a), and a residual portion (12b; 14b; 40b; 42b) connecting to the intermediate portion (II);
a plurality of electrodes (16; 46)) provided on the substrate at positions adjoining to the intermediate portions (II) for controlling the refractive index between the intermediate portions (II);
wherein a branched part (I) being cross-shaped is formed by the end portions of said two input waveguide routes (26, 28; 50, 52) and the end parts (12a; 14a) of said first and second waveguide routes connecting to said end portions;
wherein the configurations of the first and second waveguide routes (12, 14; 40, 42) are symmetrical to each other;
wherein the distance between the first (12; 40) and second (14; 42) waveguide routes increases with the distance from the branched part (I) toward the residual portion thereof; and
wherein when a starting point (z = 0, τ = 0) of each of the intermediate portions (II) is defined by a boundary between the end part (12a; 14a) belonging to the branched part (I) and the intermediate portion (II), and an end point (z = L, τ = 1) is defined by another boundary between the intermediate portion (II) and the residual portion (12b; 14b; 40b; 42b), the local branch angle between the first and second waveguide routes in a region corresponding to the intermediate portions (II) is changing stepwise or continuously from the starting point toward the end point,
wherein
each of the intermediate portions (II) comprises a curved waveguide route portion, the local branch angle between the first and second waveguide routes in a region corresponding to the curved waveguide route portion is maximum at said starting point and decreases stepwise or continuously from the starting point towards the end point, wherein said curved waveguide portion is either logarithmically curved, or its shape is given by${\text{ω = α · (z + z}}_{\text{0}} {\text{)}}^{\text{n}}$
wherein ω is a normalized interval between the opposed inside edges (a1, b1) of the first and second waveguide routes (12, 14; 40, 42),
z is the distance measured from the starting end of the intermediate portion towards the terminal end thereof along the direction of the symmetry axis,
α and n are parameters indicating the plane shape of the first and second waveguide routes (12, 14; 40, 42) and positive, and 0 < n < 1 ;
z₀ is a parameter indicating the maximum local branch angle; and
each specified local branch angle dω/dz of the inside edges (a1, b1) is given as
${\text{dω/dz=n·α·(z + z}}_{\text{0}} {\text{)}}^{\text{n-1}} \text{.}$

3. The waveguide-type optical switch as claimed in claim 1 or 2, wherein the intermediate portion (II) is bent smoothly.

4. The waveguide-type optical switch as claimed in claim 1 or 2, wherein the intermediate portion (II) is bent in in multiple steps.

5. The waveguide-type optical switch as claimed in claim 1 or 2, wherein the intermediate portions (II) of the first and second waveguide routes (12, 14; 40, 42) form a waveguide route system preserving the normal mode between a starting point (z = O) of each of the intermediate portions (II) and the end point of each of the intermediate portions (II).

6. The waveguide-type optical switch as claimed in claim 1 or 2, wherein the branched part (I) of the first and second waveguide routes (12, 14; 40, 42) is adapted to equally divide the optical power of normal mode into these first and second waveguide routes (12, 14; 40, 42); and wherein each intermediate portion (II) of the first and second waveguide routes (12, 14; 40, 42) is adapted to concentrate the equally divided normal mode optical power to either one waveguide route of the first and second waveguide routes.

7. The waveguide-type optical switch as claimed in claim 1 or 2, wherein each intermediate portion (II) of the first and second waveguide routes (12, 14; 40, 42) is located adjacent to the electrodes (16: 16a, 16b, 16c; 46: 46a - 46j).

8. The waveguide-type optical switch as claimed in claim 1 or 2, wherein said plurality of electrodes (16; 46) comprises first, second and third electrode members (16a, 16b, 16c; 46e, 46f, 46g; 46h, 46i, 46j) being formed independently;
said first electrode member (16a; 46e; 46h) being located besides said first waveguide route (12; 40) on the side thereof remote from the second waveguide route (14; 42);
said second electrode member (16b; 46f; 46i) being located between said first and said second waveguide routes (12, 14; 40, 42); and
said third electrode member (16c; 46g; 46j) being located besides said second waveguide route (14; 42) on the side thereof remote from said first waveguide route (12; 40).

9. The waveguide-type optical switch as claimed in claim 1 or 2, wherein a center line of said first waveguide route (12; 40) is symmetric with a center line of said second waveguide route (14; 42) with respect to said straight symmetry axis.

10. The waveguide-type optical switch as claimed in claim 9, wherein said branched part (I) is symmetric with respect to said straight axis.

11. The waveguide-type optical switch as claimed in claim 9, wherein the starting ends of said first, second and third electrode members (16a, 16b, 16c; 46e, 46f, 46g; 46h, 46i, 46j) being located next to the branched part (I) and the starting point of the intermediate portion (II) lie at the same position in the axial direction of said straight axis, and the terminal ends of the first, second and third electrode members (16a, 16b, 16c; 46e, 46f, 46g; 46h, 46i, 46j) being located remote to the branched part (I) and the end point of the intermediate portion (II) lie at the same position in the axial direction of said straight axis.

12. The waveguide-type optical switch as claimed in claim 1 or 2, wherein the intermediate portions (II) of the first and second waveguide routes (12, 14; 40, 42) are separated from each other by such a distance that when a voltage is applied to the electrodes (16; 46) to operate the optical switch (10; 60; 62; 64; 66; 68), an optical field distribution may exist at the terminal end part of either one of the intermediate portions (II) of the first and second waveguide routes (12, 14; 40, 42) and may not exist at the other intermediate portion.

13. The waveguide-type optical switch as claimed in claim 9, wherein the following formula is established when a normalized interval between the opposed inside edges (a1, b1) of the first and second waveguide routes (12, 14; 40, 42) is expressed as " ω ", and a distance in positive direction to the intermediate portion from the branched portion along the straight axis is expressed as "z",${\text{ω = S · (D - D}}_{\text{0}} \text{)}$ where
S is a parameter showing optical amount exuded or oozed from the first and second waveguide routes (12, 14; 40, 42) and naturally determined by the sectional shape of their waveguide routes;
"D" is the distance measured in the direction with right angle to Z-axis between inside edges of the first and second waveguide routes;
"Dₒ" is the distance of "D" at the starting end of the intermediate portion; and
each specified local branch angle dω/dz of the inside edges (a1, b1) is given as dω/dz = S dD/dz.

14. The waveguide-type optical switch as claimed in claim 9, wherein the following relation is established at z = 0.$\text{0 < dω/dz < π/90.}$

15. The waveguide-type optical switch as claimed in claim 9, wherein the following formula is established$\frac{\text{2·K(z)}}{\text{dω/dz}} \text{> 0.43}$ where K(z) is a coupling coefficient between the first and second waveguide routes (12, 14) at a position of the distance z.

16. The waveguide-type optical switch as claimed in claim 2, wherein the first input waveguide route (26) has thinner width than that of the second input waveguide route (28).

17. The waveguide-type optical switch as claimed in claim 1 or 2, wherein the length of the electrodes (46) measured along the z-axis is expressed as "L";
a normalized distance specified by the electrode length "L" for the distance measured from the starting point of the intermediate portion (II) toward the end point thereof along said symmetry axis is expressed as "τ", with respect to which axis a center line of the first waveguide route (40) is symmetric with a center line of the second waveguide route (42); and
the local branch angle at the intermediate portion (II) is maximum at the starting point τ = 0 and gradually becomes smaller from τ = 0 towards τ = r (0 < r < 1), and the local branch angle from τ = r to the end point τ = 1 is smaller than the local branch angle at and around τ = 0, and
wherein the intermediate portion (II) of each of the first and second waveguide routes (40, 42) comprises a curved waveguide route part for 0 < τ ≤ r and a straight waveguide part for r < τ ≤1.

18. The waveguide-type optical switch as claimed in claim 17, wherein the local branch angle at the straight waveguide route part (r < τ ≤ 1) is that of the curved waveguide route part (0 < τ ≤ r) of the intermediate portion at τ = r.

19. The waveguide-type optical switch as claimed in claim 17, wherein the following formula is established:${\text{ω = ln[(R}}^{\text{-1}} \text{- 1) · τ + 1]} \text{0 ≤ τ ≤ 1}$ where "ω" is the normalized distance between the inside edges (a1, b1) of said first and second waveguides routes (42, 40) at a distance γ from said starting point (τ = 0) towards said end point (τ = 1), and "R" is the min/max coupling coefficient ratio between the first and second waveguide routes (40, 42).

20. The waveguide-type optical switch as claimed in claim 17, wherein said curved waveguide route parts of the first and second waveguide routes (40, 42) have a logarithmic type route shape.

21. The waveguide-type optical switch as claimed in claim 1 or 2, wherein the curve form of the first and second waveguide routes (12, 14; 40, 42) is expressed as${\text{ω = ln [(R}}^{\text{-1}} \text{- 1) f(τ)+1]}$ whereas,$\text{f(τ) = {exp[(-ln R)eτ]-1}/{exp[(-ln R)e]-1}} \text{0 ≤ e < 1} \text{τ = z/L}$
"L" is the length of the electrodes measured along the z-axis;
"R" is a min/max coupling coefficient ratio between first and second waveguide routes; and
"e" is a parameter determining the curve form.

22. The waveguide-type optical switch as claimed in claim 1 or 2, wherein the curve form of the first and second waveguide routes (12, 14; 40, 42) is expressed as${\text{ω=ln(R}}^{\text{-1}} {\text{){ln[(R}}^{\text{-1}} {\text{-1) eτ+1]}/{ln[(R}}^{\text{-1}} \text{-1)e+1]}}$ whereas,$\text{0 < e ≤ 1} \text{τ = z/L}$
"L" is the length of the electrodes measured along the z-axis;
"R" is a min/max coupling coefficient ratio between first and second waveguide routes; and
"e" is a parameter determining the curve form.

23. The waveguide-type optical switch as claimed in claim 1 or 2, wherein when "R" designates a min/max coupling coefficient ratio between the first and second waveguide route (12, 14; 40, 42) and the following relation is given.$\text{0.003 < R < 0.03.}$

24. The waveguide-type optical switch as claimed in claim 1 or 2, wherein the width of the first waveguide route (12; 40) is same to that of the second waveguide route (14; 42).

## Patentansprüche

1. Optischer Wellenleiterschalter (10; 60; 62), der folgendes enthält:
ein Substrat (20; 48),
einen Eingangs-Wellenleiterweg (18; 44), der auf dem Substrat vorgesehen ist,
einen ersten und einen zweiten Wellenleiterweg (12, 14; 40, 42), die auf dem Substrat vorgesehen sind und sich von dem einen Eingangs-Wellenleiterweg (18; 44) verzweigen, wobei der erste und der zweite Wellenleiterweg jeweils einen Endteil (12a, 14a), einen mit dem Endteil (12a, 14a) verbundenen Zwischenabschnitt (II) und einen mit dem Zwischenabschnitt (II) verbundenen Restabschnitt (12b, 14b; 40b, 42b) aufweisen,
mehrere Elektroden (16; 46), die in an die Zwischenabschnitte (II) angrenzenden Positionen auf dem Substrat vorgesehen sind, zur Steuerung des Brechungsindex zwischen den Zwischenabschnitten (II),
wobei ein Y-förmiger Abzweigteil (I) durch einen Endabschnitt des Eingangs-Wellenleiterweges (18; 44) und die mit dem Endabschnitt verbundenen Endteile des ersten und des zweiten Wellenleiterweges (12a; 14a) gebildet wird,
wobei der Aufbau des ersten (12; 40) und der des zweiten (14; 42) Wellenleiterweges symmetrisch zueinander sind,
wobei die Entfernung zwischen dem ersten (12; 40) und dem zweiten (14; 42) Wellenleiterweg mit der Entfernung vom Abzweigteil (I) in Richtung auf deren Restabschnitt größer wird, und
wobei, wenn ein Anfangspunkt (z=0, τ=0) jedes der Zwischenabschnitte (II) durch eine Grenze zwischen dem zum Abzweigteil (I) gehörenden Endteil (12a; 14a) und dem Zwischenabschnitt (II) definiert ist und ein Endpunkt (z = L, τ= 1) durch eine weitere Grenze zwischen dem Zwischenabschnitt (II) und dem Restabschnitt (12b, 14b; 40b, 42b) definiert ist, der lokale Verzweigungswinkel zwischen dem ersten und dem zweiten Wellenleiterweg sich in einem den Zwischenabschnitten (II) entsprechenden Bereich stufenweise oder stetig vom Anfangspunkt in Richtung auf den Endpunkt ändert,
**dadurch gekennzeichnet,**
daß jeder der Zwischenabschnitte (II) einen gekrümmten Wellenleiterweg-Abschnitt aufweist, wobei der lokale Verzweigungswinkel zwischen dem ersten und dem zweiten Wellenleiterweg in einem Bereich, der dem gekrümmten Wellenleiterweg-Abschnitt entspricht, an dem Anfangspunkt maximal ist und stufenweise oder stetig vom Anfangspunkt in Richtung auf den Endpunkt kleiner wird, wobei der gekrümmte Wellenleiterweg-Abschnitt entweder logarithmisch gekrümmt ist oder seine Form gegeben ist durch${\text{ω=α·(z+z}}_{\text{0}} {\text{)}}^{\text{n}}$
wobei ω ein normierter Abstand zwischen den einander gegenüberliegenden Innenrändern (a1, b1) des ersten und des zweiten Wellenleiterweges (12, 14; 40, 42) ist,
z die vom Anfangspunkt des Zwischenabschnitts in Richtung auf dessen Anschlußende gemessene Entfernung entlang der Richtung der Symmetrieachse ist,
α und n Parameter sind, welche die ebene Form des ersten und des zweiten Wellenleiterweges (12, 14; 40, 42) anzeigen und positiv sind, mit 0<n<1,
z₀ ein Parameter ist, der den maximalen lokalen Verzweigungswinkel anzeigt, und jeder spezifizierte lokale Verzweigungswinkel dw/dz der Innenränder (a1, b1) gegeben ist als${\text{dω/dz = n·α·(z +z}}_{\text{0}} {\text{)}}^{\text{n-1}} \text{.}$

2. Optischer Wellenleiterschalter (64; 66; 68), der folgendes enthält:
ein Substrat (20; 48),
zwei Eingangs-Wellenleiterwege (26, 28; 50, 52), die auf dem Substrat vorgesehen sind,
einen ersten und einen zweiten Wellenleiterweg (12, 14; 40, 42), die auf dem Substrat vorgesehen sind und sich von den beiden Eingangs-Wellenleiterwegen (12, 14; 40, 42) verzweigen, wobei der erste und der zweite Wellenleiterweg jeweils einen Endteil (12a, 14a), einen mit dem Endteil (12a, 14a) verbundenen Zwischenabschnitt (II) und einen mit dem Zwischenabschnitt (II) verbundenen Restabschnitt (12b, 14b; 40b, 42b) aufweisen,
mehrere Elektroden (16; 46), die in an die Zwischenabschnitte (II) angrenzenden Positionen auf dem Substrat vorgesehen sind, zur Steuerung des Brechungsindex zwischen den Zwischenabschnitten (II),
wobei ein kreuzförmiger Abzweigteil (I) durch die Endabschnitte der beiden Eingangs-Wellenleiterwege (26, 28; 50, 52) und die mit den Endabschnitten verbundenen Endteile (12a, 14a) des ersten und des zweiten Wellenleiterweges gebildet wird,
wobei der Aufbau des ersten und der des zweiten Wellenleiterweges (12, 14; 40, 42) symmetrisch zueinander sind,
wobei die Entfernung zwischen dem ersten (12; 40) und dem zweiten (14; 42) Wellenleiterweg mit der Entfernung vom Abzweigteil (I) in Richtung auf deren Restabschnitt größer wird, und
wobei, wenn ein Anfangspunkt (z=0, τ=0) jedes der Zwischenabschnitte (II) durch eine Grenze zwischen dem zum Abzweigteil (I) gehörenden Endteil (12a; 14a) und dem Zwischenabschnitt (II) definiert ist und ein Endpunkt (z = L, τ=1) durch eine weitere Grenze zwischen dem Zwischenabschnitt (II) und dem Restabschnitt (12b, 14b; 40b, 42b) definiert ist, der lokale Verzweigungswinkel zwischen dem ersten und dem zweiten Wellenleiterweg sich in einem den Zwischenabschnitten (II) entsprechenden Bereich stufenweise oder stetig vom Anfangspunkt in Richtung auf den Endpunkt ändert,
wobei
jeder der Zwischenabschnitte (II) einen gekrümmten Wellenleiterweg-Abschnitt aufweist, wobei der lokale Verzweigungswinkel zwischen dem ersten und dem zweiten Wellenleiterweg in einem Bereich, der dem gekrümmten Wellenleiterweg-Abschnitt entspricht, an dem Anfangspunkt maximal ist und stufenweise oder stetig vom Anfangspunkt in Richtung auf den Endpunkt kleiner wird, wobei der gekrümmte Wellenleiterweg-Abschnitt entweder logarithmisch gekrümmt ist oder seine Form gegeben ist durch${\text{ω = α · (z + z}}_{\text{0}} {\text{)}}^{\text{n}}$
wobei ω ein normierter Abstand zwischen den einander gegenüberliegenden Innenrändern (a1, b1) des ersten und des zweiten Wellenleiterweges (12, 14; 40, 42) ist,
z die vom Anfangspunkt des Zwischenabschnitts in Richtung auf dessen Anschlußende gemessene Entfernung entlang der Richtung der Symmetrieachse ist,
α und n Parameter sind, welche die ebene Form des ersten und des zweiten Wellenleiterweges (12, 14; 40, 42) anzeigen und positiv sind, mit 0< n < 1,
z₀ ein Parameter ist, der den maximalen lokalen Verzweigungswinkel anzeigt, und jeder spezifizierte lokale Verzweigungswinkel dw/dz der Innenränder (a1, b1) gegeben ist als
${\text{dω/dz = n · α · (z + z}}_{\text{0}} {\text{)}}^{\text{n-1}} \text{.}$

3. Optischer Wellenleiterschalter wie in Anspruch 1 oder 2 beansprucht, wobei der Zwischenabschnitt (II) sanft gebogen ist.

4. Optischer Wellenleiterschalter wie in Anspruch 1 oder 2 beansprucht, wobei der Zwischenabschnitt (II) in mehreren Stufen gebogen ist.

5. Optischer Wellenleiterschalter wie in Anspruch 1 oder 2 beansprucht, wobei die Zwischenabschnitte (II) des ersten und des zweiten Wellenleiterweges (12, 14; 40, 42) ein Wellenleiterweg-System bilden, das die Eigenschwingung zwischen einem Anfangspunkt (z=O) jedes Zwischenabschnitts (II) und dem Endpunkt jedes Zwischenabschnitts (II) aufrechterhält.

6. Optischer Wellenleiterschalter wie in Anspruch 1 oder 2 beansprucht, wobei der Abzweigteil (I) des ersten und des zweiten Wellenleiterweges (12, 14; 40, 42) dafür eingerichtet ist, die Eigenschwingungs-Lichtleistung in den ersten und den zweiten Wellenleiterweg (12, 14; 40, 42) hinein gleich aufzuteilen, und wobei jeder Zwischenabschnitt (II) des ersten und des zweiten Wellenleiterweges (12, 14; 40, 42) dafür eingerichtet ist, die gleich aufgeteilte Eigenschwingungs-Lichtleistung auf den ersten oder auf den zweiten Wellenleiterweg zu konzentrieren.

7. Optischer Wellenleiterschalter wie in Anspruch 1 oder 2 beansprucht, wobei jeder Zwischenabschnitt (II) des ersten und des zweiten Wellenleiterweges (12, 14; 40, 42) an die Elektroden (16: 16a, 16b, 16c; 46: 46a-46j) angrenzt.

8. Optischer Wellenleiterschalter wie in Anspruch 1 oder 2 beansprucht, wobei die mehreren Elektroden (16; 46) ein erstes, ein zweites und ein drittes Elektrodenelement (16a, 16b, 16c; 46e, 46f, 46g; 46h, 46i, 46j) aufweisen, die unabhängig gebildet sind,
das erste Elektrodenelement (16a; 46e; 46h) neben dem ersten Wellenleiterweg (12; 40) auf dessen vom zweiten Wellenleiterweg (14; 42) entfernten Seite liegt, das zweite Elektrodenelement (16b; 46f; 46i) zwischen dem ersten und dem
zweiten Wellenleiterweg (12, 14; 40, 42) liegt und das dritte Elektrodenelement (16c; 46g; 46j) neben dem zweiten Wellenleiterweg (14; 42) auf dessen vom ersten Wellenleiterweg (12; 40) entfernten Seite liegt.

9. Optischer Wellenleiterschalter wie in Anspruch 1 oder 2 beansprucht, wobei eine Mittellinie des ersten Wellenleiterweges (12; 40) zu einer Mittellinie des zweiten Wellenleiterweges (14; 42) symmetrisch in bezug auf die gerade Symmetrieachse ist.

10. Optischer Wellenleiterschalter wie in Anspruch 9 beansprucht, wobei der Abzweigteil (I) symmetrisch in bezug auf die gerade Achse ist.

11. Optischer Wellenleiterschalter wie in Anspruch 9 beansprucht, wobei die in der Nähe des Abzweigteils (I) liegenden Anfangsenden des ersten, des zweiten und des dritten Elektrodenelementes (16a, 16b, 16c; 46e, 46f, 46g; 46h, 46i, 46j) und der Anfangspunkt des Zwischenabschnitts (II) an der gleichen Position in der axialen Richtung der geraden Achse liegen und die vom Abzweigteil (I) entfernten Anschlußenden des ersten, des zweiten und des dritten Elektrodenelementes (16a, 16b, 16c; 46e, 46f, 46g; 46h, 46i, 46j) und der Endpunkt des Zwischenabschnitts (II) an der gleichen Position in der axialen Richtung der geraden Achse liegen.

12. Optischer Wellenleiterschalter wie in Anspruch 1 oder 2 beansprucht, wobei die Zwischenabschnitte (II) des ersten und des zweiten Wellenleiterweges (12, 14; 40, 42) um so eine Entfernung voneinander getrennt sind, daß, wenn eine Spannung an die Elektroden (16; 46) angelegt wird, um den optischen Schalter (10; 60; 62; 64; 66; 68) zu betätigen, am Anschlußendteil eines der Zwischenabschnitte (II) des ersten und des zweiten Wellenleiterweges (12, 14; 40, 42) eine optische Feldverteilung vorhanden sein kann und an dem anderen Zwischenabschnitt nicht vorhanden sein kann.

13. Optischer Wellenleiterschalter wie in Anspruch 9 beansprucht, wobei die folgende Formel gilt, wenn ein normierter Abstand zwischen den einander gegenüberliegenden Innenrändern (a1, b1) des ersten und des zweiten Wellenleiterweges (12, 14; 40, 42) als "ω" ausgedrückt wird und eine Entfernung vom Abzweigteil in positiver Richtung zum Zwischenabschnitt entlang der geraden Achse als "z" ausgedrückt wird,${\text{ω=S · (D - D}}_{\text{0}} \text{)}$
wobei S ein Parameter ist, der die aus dem ersten und dem zweiten Wellenleiterweg (12, 14; 40, 42) austretende oder entweichende Lichtmenge anzeigt und durch die Querschnittsform ihrer Wellenleiterwege selbstbestimmt ist,
"D" die in der Richtung rechtwinklig zur Z-Achse gemessene Entfernung zwischen Innenrändern des ersten und des zweiten Wellenleiterweges ist,
"D₀" die Entfernung "D" an Anfangsende des Zwischenabschnitts ist und
jeder spezifizierte lokale Verzweigungswinkel dω/dz der Innenränder (a1, b1) gegeben ist als dω/dz = S dD/dz.

14. Optischer Wellenleiterschalter wie in Anspruch 9 beansprucht, wobei bei z = 0 die folgende Beziehung gilt:$\text{0 < dω/dz < π/90.}$

15. Optischer Wellenleiterschalter wie in Anspruch 9 beansprucht, wobei die folgende Formel gilt:$\frac{\text{2·K(z)}}{\text{dω/dz}} \text{> 0,43}$ wobei K(z) ein Kopplungskoeffizient zwischen dem ersten und dem zweiten Wellenleiterweg (12, 14) an einer Position der Entfernung z ist.

16. Optischer Wellenleiterschalter wie in Anspruch 2 beansprucht, wobei der erste Eingangs-Wellenleiterweg (26) eine geringere Breite als der zweite Eingangs-Wellenleiterweg (28) hat.

17. Optischer Wellenleiterschalter wie in Anspruch 1 oder 2 beansprucht, wobei die entlang der Z-Achse gemessene Länge der Elektroden (46) als "L" ausgedrückt wird,
eine durch die Elektrodenlänge "L" spezifizierte normierte Entfernung für die vom Anfangspunkt des Zwischenabschnitts (II) in Richtung auf dessen Endpunkt entlang der Symmetrieachse gemessene Entfernung als "τ" ausgedrückt wird, in bezug darauf, welche Achse einer Mittellinie des ersten Wellenleiterweges (40) zu einer Mittellinie des zweiten Wellenleiterweges (42) symmetrisch ist, und
der lokale Verzweigungswinkel im Zwischenabschnitt (II) am Anfangspunkt τ=0 maximal ist und von τ=0 auf τ=r (0<r<1) zu allmählich kleiner wird und der lokale Verzweigungswinkel von τ=r r bis zum Endpunkt τ=1 kleiner als der lokale Verzweigungswinkel bei und um τ=0 herum ist, und
wobei die Zwischenabschnitte (II) des ersten und des zweiten Wellenleiterweges (40, 42) jeweils einen gekrümmten Wellenleiterweg-Teil für 0<τ≤r und einen geraden Wellenleiterweg-Teil für r<τ≤1 aufweisen.

18. Optischer Wellenleiterschalter wie in Anspruch 17 beansprucht, wobei der lokale Verzweigungswinkel in dem geraden Wellenleiterweg-Teil (r<τ≤1) derjenige des gekrümmten Wellenleiterweg-Teils (0<τ≤r) des Zwischenabschnitts bei τ=r ist.

19. Optischer Wellenleiterschalter wie in Anspruch 17 beansprucht, wobei die folgende Formel gilt:${\text{ω=ln [(R}}^{\text{-1}} \text{- 1) · τ+1]} \text{0≤τ≤1}$ wobei "ω" die normierte Entfernung zwischen den Innenrändern (a1, b1) des ersten und des zweiten Wellenleiterweges (42, 40) in einer Entfernung T von dem Anfangspunkt (τ=0) in Richtung auf den Endpunkt (τ=1) ist und "R" das Minimum/Maximum-Kopplungskoeffizient-Verhältnis zwischen dem ersten und dem zweiten Wellenleiterweg (40, 42) ist.

20. Optischer Wellenleiterschalter wie in Anspruch 17 beansprucht, wobei die gekrümmten Wellenleiterweg-Teile des ersten und des zweiten Wellenleiterweges (40, 42) eine logarithmische Wegform haben.

21. Optischer Wellenleiterschalter wie in Anspruch 1 oder 2 beansprucht, wobei die Kurvenform des ersten und des zweiten Wellenleiterweges (12, 14; 40, 42) ausgedrückt wird als${\text{ω=ln[(R}}^{\text{-1}} \text{- 1) f(τ)+1]}$ wobei$\text{f(τ)={exp[(-ln R) eτ] - 1}/{exp [(-ln R) e] - 1}} \text{0≤e<1} \text{τ=z/L}$
"L" die entlang der Z-Achse gemessene Länge der Elektroden ist,
"R" ein Minimum/Maximum-Kopplungskoeffizient-Verhältnis zwischen dem ersten und dem zweiten Wellenleiterweg ist, und
"e" ein Parameter ist, der die Kurvenform bestimmt.

22. Optischer Wellenleiterschalter wie in Anspruch 1 oder 2 beansprucht, wobei die Kurvenform des ersten und des zweiten Wellenleiterweges (12, 14; 40, 42) ausgedrückt wird als${\text{ω=ln(R}}^{\text{-1}} {\text{) {ln [R}}^{\text{-1}} {\text{- 1) eτ+1]} / {ln [R}}^{\text{-1}} \text{- 1) e+1]}}$ wobei$\text{0<e≤1} \text{τ=z/L}$
"L" die entlang der Z-Achse gemessene Länge der Elektroden ist,
"R" ein Minimum/Maximum-Kopplungskoeffizient-Verhältnis zwischen dem ersten und dem zweiten Wellenleiterweg ist, und
"e" ein Parameter ist, der die Kurvenform bestimmt.

23. Optischer Wellenleiterschalter wie in Anspruch 1 oder 2 beansprucht, wobei "R" ein Minimum/Maximum-Kopplungskoeffizient-Verhältnis zwischen dem ersten und dem zweiten Wellenleiterweg (12, 14; 40, 42) bezeichnet und die folgende Beziehung gilt$\text{0,003< R < 0,03.}$

24. Optischer Wellenleiterschalter wie in Anspruch 1 oder 2 beansprucht, wobei die Breite des ersten Wellenleiterweges (12; 40) die gleiche wie die des zweiten Wellenleiterweges (14; 42) ist.

## Revendications

1. Commutateur (10; 60; 62) optique du type guide d'ondes comprenant
un substrat (20; 48) ;
un trajet (18; 44) de guide d'ondes d'entrée réalisé sur le substrat ;
des premier et second trajets (12, 14; 40, 42) de guides d'ondes réalisés sur le substrat et se ramifiant à partir dudit un trajet (18; 44) de guide d'ondes d'entrée, les premier et second trajets de guides d'ondes ayant chacun une partie (12a, 14a) d'extrémité, une partie (Il) intermédiaire connectée à la partie (12a, 14a) d'extrémité, et une partie (12b; 14b; 40b; 42b) résiduelle connectée à la partie (Il) intermédiaire ;
un ensemble d'électrodes (16; 46) réalisées sur le substrat à des positions adjacentes aux parties (Il) intermédiaires pour commander l'indice de réfraction entre les parties (II) intermédiaires ;
dans lequel une partie (I) ramifiée en forme de Y est formée par une partie d'extrémité dudit trajet (18; 44) de guide d'ondes d'entrée et les parties d'extrémité des premier et second trajets (12a ; 14a) de guides d'ondes étant connectées à la partie d'extrémité ;
dans lequel les configurations des premier (12; 40) et second (14; 42) trajets de guides d'ondes sont symétriques l'une par rapport à l'autre ;
dans lequel la distance entre les premier (12; 40) et second (14; 42) trajets de guides d'ondes croît avec la distance de la partie (I) ramifiée vers leur partie résiduelle ; et
dans lequel lorsqu'un point de départ (z=0, τ=0) de chacune des parties (II) intermédiaires est défini par une frontière entre la partie (12a; 14a) d'extrémité appartenant à la partie (I) ramifiée et la partie (Il) intermédiaire, et un point d'extrémité (z=L, τ=1) est défini par une autre frontière entre la partie (II) intermédiaire et la partie (12b; 14b; 40b; 42b) résiduelle, l'angle de ramification local entre les premier et second trajets de guides d'ondes, dans une région correspondant aux parties (II) intermédiaires, varie par pas successifs ou de façon continue du point de départ vers le point d'extrémité,
caractérisé en ce que chacune des parties (Il) intermédiaires comprend une partie de trajet de guide d'ondes incurvée, l'angle de ramification local entre les premier et second trajets de guides d'ondes, dans une région correspondant à la partie de trajet de guide d'ondes incurvée, est maximum audit point de départ et décroît par pas successifs ou de façon continue du point de départ vers le point d'extrémité, dans lequel la partie de guide d'ondes incurvée présente soit une courbure logarithmique, soit une forme donnée par :${\text{ω = α·(z+z}}_{\text{0}} {\text{)}}^{\text{n}}$
où ω est un intervalle normalisé entre les bords (a1, b1) intérieurs opposés des premier et second trajets (12, 14; 40, 42) de guides d'ondes,
z est la distance mesurée par rapport à l'extrémité de départ de la partie intermédiaire vers son extrémité terminale suivant la direction de l'axe de symétrie,
α et n sont des paramètres indiquant la forme du plan des premier et second trajets (12, 14; 40, 42) de guides d'ondes et sont positifs, et 0 < n < 1 ;
z₀ est un paramètre indiquant l'angle de ramification local maximum, et
chaque angle de ramification local spécifié dω/dz des bords (a1, b1) intérieurs est donné par :${\text{dω/dz = n·α·(z+z}}_{\text{0}} {\text{)}}^{\text{n-1}} \text{.}$

2. Commutateur (64; 66; 68) optique du type guide d'ondes comprenant
un substrat (20; 48) ;
deux trajets (26, 28; 50, 52) de guide d'ondes d'entrée réalisés sur le substrat ;
des premier et second trajets (12, 14; 40, 42) de guides d'ondes réalisés sur le substrat et se ramifiant à partir desdits deux trajets (26, 28; 50, 52) de guides d'ondes d'entrée, les premier et second trajets de guides d'ondes ayant chacun une partie (12a, 14a) d'extrémité, une partie (II) intermédiaire connectée à la partie (12a, 14a) d'extrémité, et une partie (12b; 14b; 40b; 42b) résiduelle connectée à la partie (II) intermédiaire ;
un ensemble d'électrodes (16;46) réalisées sur le substrat à des positions adjacentes aux parties (II) intermédiaires pour commander l'indice de réfraction entre les parties (II) intermédiaires ;
dans lequel une partie (I) ramifiée en forme de croix est formée par les parties d'extrémité desdits deux trajets (26, 28; 50, 52) de guides d'ondes d'entrée et les parties (12a ; 14a) d'extrémité desdits premier et second trajets de guides d'ondes étant connectées auxdites parties d'extrémité ;
dans lequel les configurations des premier et second (12, 14; 40, 42) trajets de guides d'ondes sont symétriques l'une par rapport à l'autre ;
dans lequel la distance entre les premier (12; 40) et second (14; 42) trajets de guides d'ondes croît avec la distance de la partie (I) ramifiée vers leur partie résiduelle ; et
dans lequel, lorsqu'un point de départ (z=0, τ=0) de chacune des parties (Il) intermédiaires est défini par une frontière entre la partie (12a; 14a) d'extrémité appartenant à la partie (I) ramifiée et la partie (II) intermédiaire, et un point d'extrémité (z=L, τ=1) est défini par une autre frontière entre la partie (Il) intermédiaire et la partie (12b; 14b; 40b; 42b) résiduelle, l'angle de ramification local entre les premier et second trajets de guides d'ondes, dans une région correspondant aux parties (Il) intermédiaires, varie par pas successifs ou de façon continue du point de départ vers le point d'extrémité,
dans lequel
chacune des parties (II) intermédiaires comprend une partie de trajet de guide d'ondes incurvée, l'angle de ramification local entre les premier et second trajets de guides d'ondes, dans une région correspondant à la partie de trajet de guide d'ondes incurvée, est maximum audit point de départ et décroît par pas successifs ou de façon continue du point de départ vers le point d'extrémité, dans lequel ladite partie de guide d'ondes incurvée présente soit une courbure logarithmique, soit une forme donnée par :${\text{ω = α·(z+z}}_{\text{0}} {\text{)}}^{\text{n}}$
où ω est un intervalle normalisé entre les bords (a1, b1) intérieurs opposés des premier et second trajets (12, 14; 40, 42) de guides d'ondes,
z est la distance mesurée par rapport à l'extrémité de départ de la partie intermédiaire vers son extrémité terminale suivant la direction de l'axe de symétrie,
α et n sont des paramètres indiquant la forme du plan des premier et second trajets (12, 14; 40, 42) de guides d'ondes et sont positifs, et 0 < n < 1 ;
z₀ est un paramètre indiquant l'angle de ramification local maximum, et
chaque angle de ramification local spécifié dω/dz des bords (a1, b1) intérieurs est donné par :${\text{dω/dz = n·α·(z+z}}_{\text{0}} {\text{)}}^{\text{n-1}} \text{.}$

3. Commutateur optique du type guide d'ondes selon la revendication 1 ou 2, dans lequel la partie (II) intermédiaire est incurvée de façon régulière.

4. Commutateur optique du type guide d'ondes selon la revendication 1 ou 2, dans lequel la partie (II) intermédiaire est incurvée par pas multiples.

5. Commutateur optique du type guide d'ondes selon la revendication 1 ou 2, dans lequel les parties intermédiaires (II) des premier et second trajets (12, 14; 40, 42) de guides d'ondes forment un système de trajets de guides d'ondes préservant le mode normal entre un point de départ (z=0) de chacune des parties (II) intermédiaires et le point d'extrémité de chacune des parties (II) intermédiaires.

6. Commutateur optique du type guide d'ondes selon la revendication 1 ou 2, dans lequel la partie (I) ramifiée des premier et second trajets (12, 14; 40, 42) de guides d'ondes est conçue pour répartir de façon égale la puissance optique du mode normal entre ces trajets (12, 14; 40, 42) de guides d'ondes ; et dans lequel
chaque partie (Il) intermédiaire des premier et second trajets (12, 14; 40, 42) de guides d'ondes est conçue pour concentrer la puissance optique en mode normal répartie de façon égale vers l'un ou l'autre des premier et second trajets de guides d'ondes.

7. Commutateur optique du type guide d'ondes selon la revendication 1 ou 2, dans lequel chaque partie (II) intermédiaire des premier et second trajets (12, 14; 40, 42) de guides d'ondes est située à proximité immédiate des électrodes (16: 16a, 16b, 16c, 46: 46a-46j).

8. Commutateur optique du type guide d'ondes selon la revendication 1 ou 2, dans lequel ledit ensemble d'électrodes (16; 46) comprend des premier, second et troisième éléments (16a, 16b, 16c; 46e, 46f, 46g; 46h, 46i, 46j) d'électrodes formés indépendamment ;
ledit premier élément (16a; 46e; 46h) d'électrode étant situé à côté dudit premier trajet (12; 40) de guide d'ondes, du côté de celui-ci qui est éloigné du second trajet (14; 42) de guide d'ondes ;
ledit second élément (16b; 46f; 46i) d'électrode étant situé entre lesdits premier et second trajets (12, 14; 40, 42) de guides d'ondes ; et
ledit troisième élément (16c; 46g; 46j) d'électrode étant situé à côté dudit second trajet (14; 42) de guide d'ondes, du côté de celui-ci qui est éloigné dudit premier trajet (12; 40) de guide d'ondes.

9. Commutateur optique du type guide d'ondes selon la revendication 1 ou 2, dans lequel une ligne centrale dudit premier trajet (12; 40) de guide d'ondes est la symétrique d'une ligne centrale dudit second trajet (14; 42) de guide d'ondes par rapport audit axe de symétrie droit.

10. Commutateur optique du type guide d'ondes selon la revendication 9, dans lequel ladite partie (I) ramifiée est symétrique par rapport audit axe droit.

11. Commutateur optique du type guide d'ondes selon la revendication 9, dans lequel les extrémités de départ desdits premier, second et troisième éléments (16a, 16b, 16c; 46e, 46f, 46g; 46h, 46i, 46j) d'électrodes qui sont situées à proximité de la partie (I) ramifiée et du point de départ de la partie (Il) intermédiaire, se situent à la même position, dans la direction axiale dudit axe droit, et les extrémités terminales des premier, second et troisième éléments (16a, 16b, 16c; 46e, 46f, 46g; 46h, 46i, 46j) d'électrodes, qui sont situées à distance de la partie (I) ramifiée et du point d'extrémité de la partie (II) intermédiaire, se situent à la même position dans la direction axiale dudit axe droit.

12. Commutateur optique du type guide d'ondes selon la revendication 1 ou 2, dans lequel les parties intermédiaires (Il) des premier et second trajets (12, 14; 40, 42) de guides d'ondes sont séparées l'une de l'autre d'une distance telle que lorsqu'une tension est appliquée aux électrodes (16; 46) pour faire fonctionner le commutateur (10; 60; 62; 64; 66; 68) optique, une distribution de champ optique peut exister dans la partie d'extrémité terminale de l'une ou l'autre des parties (Il) intermédiaires des premier et second trajets (12, 14; 40, 42) de guides d'ondes et peut ne pas exister dans l'autre partie intermédiaire.

13. Commutateur optique du type guide d'ondes selon la revendication 9, dans lequel la formule suivante est établie lorsqu'un intervalle normalisé entre les bords (a1, b1) intérieurs opposés des premier et second trajets (12, 14; 40, 42) de guides d'ondes est exprimé par "ω", et lorsque la distance, dans la direction positive de la partie intermédiaire en partant de la partie ramifiée suivant l'axe droit, est exprimée par "z",${\text{ω=S·(D-D}}_{\text{0}} \text{)}$
où S est un paramètre représentant une grandeur optique exprimée ou produite par les premier et second trajets (12, 14; 40, 42) de guides d'ondes, et naturellement déterminée par la forme de la section de leurs trajets de guides d'ondes ;
"D" est la distance mesurée dans la direction formant un angle droit par rapport à l'axe Z entre les bords intérieurs des premier et second trajets de guides d'ondes ;
"D₀" est la distance "D" à l'extrémité de départ de la partie intermédiaire ; et chaque angle de ramification local spécifié dω/dz des bords (a1, b1) intérieurs est donné par dω/dz = S dD/dz.

14. Commutateur optique du type guide d'ondes selon la revendication 9, dans lequel la relation suivante est établie en z=0 :$\text{0 < dω/dz < π/90.}$

15. Commutateur optique du type guide d'ondes selon la revendication 9, dans lequel la relation suivante est établie:$\frac{\text{2·} \text{K} \text{(} \text{z} \text{)}}{\text{dω/dz}} \text{> 0,43}$ où K(z) est un coefficient de couplage entre les premier et second trajets (12, 14) de guides d'ondes à une position correspondant à la distance z.

16. Commutateur optique du type guide d'ondes selon la revendication 2, dans lequel le premier trajet (26) de guide d'ondes d'entrée a une largeur plus faible que celle du second trajet (28) de guide d'ondes d'entrée.

17. Commutateur optique du type guide d'ondes selon la revendication 1 ou 2, dans lequel la longueur des électrodes (46) mesurée suivant l'axe z, est exprimée par "L" ;
une distance normalisée spécifiée par la longueur "L" d'électrode pour la distance mesurée par rapport au point de départ de la partie (II) intermédiaire vers son point d'extrémité suivant ledit axe de symétrie, est exprimé par "τ", axe par rapport auquel une ligne centrale du premier trajet (40) de guide d'ondes est symétrique d'une ligne centrale du second trajet (42) de guide d'ondes ; et
l'angle de ramification local dans la partie (II) intermédiaire est maximum au point de départ τ=0 et se réduit progressivement de τ=0 vers τ=r (0<r<1), et l'angle de ramification local de τ=r au point d'extrémité τ=1 est plus petit que l'angle de ramification local à, et à proximité de, τ=0, et
dans lequel la partie (II) intermédiaire de chacun des premier et second trajets (40, 42) de guides d'ondes comprend une partie de trajet de guide d'ondes incurvée pour 0 < τ ≤ r et une partie de guide d'ondes droite pour r < τ ≤ 1.

18. Commutateur optique du type guide d'ondes selon la revendication 17, dans lequel l'angle de ramification local dans la partie de trajet de guide d'ondes droite (r < τ ≤ 1) est celui de la partie de trajet de guide d'ondes incurvée (0 < τ ≤ r) de la partie intermédiaire en τ=r.

19. Commutateur optique du type guide d'ondes selon la revendication 17, dans lequel la relation suivante est établie :${\text{ω= ln[(R}}^{\text{-1}} \text{-1)·τ+1]} \text{0 ≤ τ ≤ 1}$ où "ω" est la distance normalisée entre les bords (a1, b1) intérieurs desdits premier et second trajets (42, 40) de guides d'ondes à une distance τ dudit point de départ (τ=0) vers ledit point d'extrémité (τ=1) et "R" est le rapport des coefficients de couplage min/max entre les premier et second trajets (40, 42) de guides d'ondes.

20. Commutateur optique du type guide d'ondes selon la revendication 17, dans lequel lesdites parties de trajets de guides d'ondes incurvées des premier et second trajets (40, 42) de guides d'ondes ont une forme de trajet de type logarithmique.

21. Commutateur optique du type guide d'ondes selon la revendication 1 ou 2, dans lequel la forme de courbure des premier et second trajets (12, 14; 40, 42) de guides d'ondes est exprimée par :${\text{ω=ln [(R}}^{\text{-1}} \text{-1)f(τ)+1]}$ où$\text{f (τ)={exp[(-lnR)eτ]-1}/{{exp[(-lnR)e]-1}} \text{0≤e<1} \text{τ=z/L}$
"L" est la longueur des électrodes, mesurée suivant l'axe z,
"R" est le rapport des coefficients de couplage min/max entre les premier et second trajets de guides d'ondes ; et
"e" est un paramètre déterminant la forme de la courbure.

22. Commutateur optique du type guide d'ondes selon la revendication 1 ou 2, dans lequel la forme de la courbure des premier et second trajets (12, 14; 40, 42) de guides d'ondes est exprimée par :${\text{ω=ln [(R}}^{\text{-1}} {\text{){ln[(R}}^{\text{-1}} {\text{-1)eτ+1]}/{ln[(R}}^{\text{-1}} \text{-1)e+1]}}$ où$\text{0 ≤ e ≤ 1}$$\text{τ=z/L}$
"L" est la longueur des électrodes, mesurée suivant l'axe z ;
"R" est un rapport des coefficients de couplage min/max entre les premier et second trajets de guides d'ondes ; et
"e" est un paramètre déterminant la forme de la courbure.

23. Commutateur optique du type guide d'ondes selon la revendication 1 ou 2, dans lequel, lorsque "R" désigne un rapport des coefficients de couplage min/max entre les premier et second trajets (12, 14; 40, 42) de guides d'ondes, la relation suivante est établie :$\text{0,003 < R < 0,03.}$

24. Commutateur optique du type guide d'ondes selon la revendication 1 ou 2, dans lequel la largeur du premier trajet (12; 40) de guide d'ondes est identique à celle du second trajet (14; 42) de guide d'ondes.
